# EUROPEAN PATENT APPLICATION

(11) **EP 4 618 510 A1**
(43) Date of publication of application: **17.09.2025**
(21) Application number: 23909971.6
(22) Date of filing: 04.12.2023
(51) Int. Cl.: H04L 65/1104

(54) **REMOTE CONTROL METHOD AND COMMUNICATION APPARATUS**

(30) Priority: 28.12.2022 CN 202211697648
(71) Applicant: Huawei Technologies Co., Ltd., Shenzhen, Guangdong 518129 (CN)
(72) Inventor: XIAN, Xiaogang, Shenzhen, Guangdong 518129 (CN); XU, Changyue, Shenzhen, Guangdong 518129 (CN); FENG, Junhui, Shenzhen, Guangdong 518129 (CN); ZHANG, Chunhe, Shenzhen, Guangdong 518129 (CN); ZHUANG, Naifeng, Shenzhen, Guangdong 518129 (CN); WANG, Kun, Shenzhen, Guangdong 518129 (CN)
(74) Representative: Pfenning, Meinig & Partner mbB
(86) International application number: PCT/CN2023/136226
(87) International publication number: WO 2024/140041

(57) **Abstract**

Embodiments of this application provide a remote control method and a communication apparatus, to implement remote control performed by a customer service-side terminal device over a subscriber-side terminal device, without installing an additional remote control application program on the customer service-side terminal device and the subscriber-side terminal device. The operation is simple and easy to implement. In the method, a service system receives first remote control information from a first terminal device over a first call connection, where the first remote control information is used by the first terminal device for remote control over a second terminal device; and sends the first remote control information to the second terminal device over a second call connection, where the first call connection and the second call connection are call connections between the first terminal device and the second terminal device.

## Description

### CROSS-REFERENCE TO RELATED APPLICATIONS

This application claims priority to Chinese Patent Application No. 202211697648.X, filed with the China National Intellectual Property Administration on December 28, 2022 and entitled "REMOTE CONTROL METHOD AND COMMUNICATION APPARATUS", which is incorporated herein by reference in its entirety.

### TECHNICAL FIELD

This application relates to the field of communication technologies, and in particular, to a remote control method and a communication apparatus.

### BACKGROUND

With popularization of voice over long term evolution (voice over long term evolution, VoLTE), a conventional audio-only form evolves to a rich media form that integrates audio, video, and interaction. For example, video services such as video customer service, video ring-back tone, video call, and video advertisement are derived in alerting and answered phases of a call. The video customer service can migrate services that require face-to-face guidance in offline physical stores to online services through video sharing.

The video customer service may introduce a VoLTE-based remote control function on the basis of video sharing. Evolution from voice guidance to interactive guidance improves handling efficiency and reduces a threshold for subscribers to handle services. Currently, remote control is usually implemented by logging in to and running a same remote control application program on a subscriber-side device and a customer service-side device. The operation is complex, and an additional remote control application program needs to be installed on the subscriber-side device and the customer service-side device, which is not conducive to popularization.

### SUMMARY

Embodiments of this application provide a remote control method and a communication apparatus, to implement remote control performed by a customer service-side device over a subscriber-side device. No additional remote control application program needs to be installed on the customer service-side device and the subscriber-side device. The operation is simple and easy to implement.

According to a first aspect, an embodiment of this application provides a remote control method. The method may be performed by a service system, or may be performed by a component of the service system. In the method, first remote control information from a first terminal device is received over a first call connection, where the first remote control information is used by the first terminal device for remote control over a second terminal device; and the first remote control information is sent to the second terminal device over a second call connection, where the first call connection and the second call connection are call connections between the first terminal device and the second terminal device.

In the foregoing embodiment, the service system sends the first remote control information of the first terminal device to the second terminal device over a call connection between the first terminal device and the second terminal device, so that the first terminal device implements remote control over the second terminal device. No remote control application program needs to be installed on the first terminal device and the second terminal device, saving storage resources of the terminal device. The operation is simple and easy to implement.

In a possible implementation, before receiving the first remote control information from the first terminal device over the first call connection, the service system may further receive a first request message from the first terminal device, where the first request message is used by the first terminal device to request remote control over the second terminal device.

In a possible implementation, that the first request message is used by the first terminal device to request remote control over the second terminal device may be specifically: The first request message includes first information, and the first information is used by the first terminal device to request remote control over the second terminal device. The first information may be, for example, a remote control identifier.

In the foregoing implementation, the first terminal device may request remote control over the second terminal device by using the first request message, or may request remote control over the second terminal device by using the first information in the first request message. The implementation is flexible.

In a possible implementation, before receiving the first remote control information from the first terminal device over the first call connection, the service system may further establish the first call connection with the first terminal device. For example, that the service system establishes the first call connection with the first terminal device may be: sending first media resource information corresponding to the first call connection to the first terminal device, where the first media resource information indicates a resource used by the service system to receive the first remote control information; and receiving second media resource information corresponding to the first call connection from the first terminal device, where the second media resource information indicates a resource used by the first terminal device to send the first remote control information. In this way, the service system may negotiate with the first terminal device for a resource for receiving and sending the first remote control information, to establish the call connection.

In a possible implementation, before sending the first remote control information to the second terminal device over the second call connection, the service system may further establish the second call connection with the second terminal device. For example, that the service system establishes the second call connection with the second terminal device may be: sending the first information and third media resource information corresponding to the second call connection to the second terminal device, where the first information is used by the first terminal device to request remote control over the second terminal device, and the third media resource information indicates a resource used by the service system to send the first remote control information; and receiving the first information and fourth media resource information corresponding to the second call connection from the second terminal device, where the fourth media resource information indicates a resource used by the second terminal device to receive the first remote control information. In this way, the service system may negotiate with the second terminal device for a resource for receiving and sending the first remote control information, to establish the call connection.

In a possible implementation, the first information may be included in a contact field of a session initiation protocol message; or
the first information may be included in a supported field of a session initiation protocol message; or
the first information may be included in a body field of a session description protocol message.

In the foregoing implementation, a field in the extended session initiation protocol message or a field in the extended session description protocol message may be reused to request remote control between the first terminal device and the second terminal device.

In a possible implementation, the method may further include: The service system receives first indication information from the second terminal device over the second call connection, where the first indication information indicates to cancel the remote control performed by the first terminal device over the second terminal device; and sends the first indication information to the first terminal device over the first call connection.

In the foregoing implementation, the service system may send the first indication information of the second terminal device to the first terminal device, so that the first terminal device cancels the remote control over the second terminal device.

According to a second aspect, an embodiment of this application provides a remote control method. The method may be performed by a first terminal device, or may be performed by a component of the first terminal device. In the method, the first terminal device may receive a first operation from a customer service; and send first remote control information to a service system over a first call connection based on the first operation, where the first call connection is a call connection between the first terminal device and a second terminal device.

In a possible implementation, the method may further include: The first terminal device sends a first request message to the service system, where the first request message may be used by the first terminal device to request remote control over the second terminal device.

In a possible implementation, that the first request message is used by the first terminal device to request remote control over the second terminal device may be specifically: The first request message may include first information, and the first information is used by the first terminal device to request remote control over the second terminal device.

In a possible implementation, the first information may be included in a contact field of a session initiation protocol message; or
the first information may be included in a supported field of a session initiation protocol message; or
the first information may be included in a body field of a session description protocol message.

In a possible implementation, before sending the first remote control information to the service system over the first call connection, the first terminal device may further establish the first call connection with the service system. For example, that the first terminal device establishes the first call connection with the service system may be: receiving first media resource information corresponding to the first call connection from the service system, where the first media resource information indicates a resource used by the service system to receive the first remote control information; and sending second media resource information corresponding to the first call connection to the service system, where the second media resource information indicates a resource used by the first terminal device to send the first remote control information.

In a possible implementation, the method may further include: The first terminal device receives first indication information from the service system over the first call connection, where the first indication information indicates to cancel the remote control performed by the first terminal device over the second terminal device; and cancels the remote control over the second terminal device based on the first indication information.

According to a third aspect, an embodiment of this application provides a remote control method. The method may be performed by a second terminal device, or may be performed by a component of the second terminal device. In the method, the second terminal device receives first remote control information from a service system over a second call connection, where the second call connection is a call connection between a first terminal device and the second terminal device; and executes the first remote control information.

In a possible implementation, before receiving the first remote control information from the service system over the second call connection, the second terminal device may further establish the second call connection with the service system. For example, that the second terminal device establishes the second call connection with the service system may be: receiving first information and third media resource information corresponding to the second call connection from the service system, where the first information is used by the first terminal device to request remote control over the second terminal device, and the third media resource information indicates a resource used by the service system to send the first remote control information; and sending the first information and fourth media resource information corresponding to the second call connection to the service system, where the fourth media resource information indicates a resource used by the second terminal device to receive the first remote control information.

In a possible implementation, the first information may be included in a contact field of a session initiation protocol message; or
the first information may be included in a supported field of a session initiation protocol message; or
the first information may be included in a body field of a session description protocol message.

In a possible implementation, before sending the first information and the fourth media resource information corresponding to the second call connection to the second terminal device, the second terminal device may further receive a second operation from a subscriber, where the second operation indicates to accept remote over performed by the first terminal device over the second terminal device.

In the foregoing implementation, the subscriber can choose to accept the remote control from the first terminal device or choose to reject the remote control from the first terminal device.

In a possible implementation, the method may further include: The second terminal device receives a third operation from the subscriber, where the third operation is used to cancel the remote control performed by the first terminal device over the second terminal device; and sends first indication information to the service system over the second call connection based on the third operation, where the first indication information indicates to cancel the remote control performed the first terminal device over the second terminal device.

According to a fourth aspect, an embodiment of this application provides another remote control method. The method may be performed by a service system, or may be performed by a component of the service system. In the method, the service system receives second remote control information from a second terminal device over a third call connection, where the second remote control information is used by the second terminal device for remote control over a first terminal device; and sends the second remote control information to the first terminal device over a fourth call connection, where the third call connection and the fourth call connection are call connections between the first terminal device and the second terminal device.

In a possible implementation, before receiving the second remote control information from the second terminal device over the third call connection, the service system may further receive a second request message from the first terminal device, where the second request message may be used by the first terminal device to request the second terminal device to perform remote control over the first terminal device.

In a possible implementation, that the second request message is used by the first terminal device to request the second terminal device to perform remote control over the first terminal device may be specifically: The second request message includes second information, and the second information is used by the first terminal device to request the second terminal device to perform remote control over the first terminal device.

In a possible implementation, before sending the second remote control information to the first terminal device over the fourth call connection, the service system may further establish the fourth call connection with the first terminal device. For example, that the service system establishes the fourth call connection with the first terminal device may be: sending the second information and fifth media resource information corresponding to the fourth call connection to the first terminal device, where the second information is used by the first terminal device to request the second terminal device to perform remote control over the first terminal device, and the fifth media resource information indicates a resource used by the service system to send the second remote control information; and receiving the second information and sixth media resource information corresponding to the fourth call connection from the first terminal device, where the sixth media resource information indicates a resource used by the first terminal device to receive the second remote control information.

In a possible implementation, before receiving the second remote control information from the second terminal device over the third call connection, the service system may further establish the third call connection with the second terminal device. For example, that the service system establishes the third call connection with the second terminal device may be: sending seventh media resource information corresponding to the third call connection to the second terminal device, where the seventh media resource information indicates a resource used by the service system to receive the second remote control information; and receiving eighth media resource information corresponding to the third call connection from the second terminal device, where the eighth media resource information indicates a resource used by the second terminal device to send the second remote control information.

In a possible implementation, the second information may be included in a contact field of a session initiation protocol message; or
the second information may be included in a supported field of a session initiation protocol message; or
the second information may be included in a body field of a session description protocol message.

In a possible implementation, the method may further include: The service system receives second indication information from the first terminal device over the fourth call connection, where the second indication information indicates to cancel the remote control performed by the second terminal device over the first terminal device; and sends the second indication information to the second terminal device over the third call connection.

According to a fifth aspect, an embodiment of this application provides another remote control method. The method may be performed by a first terminal device, or may be performed by a component of the first terminal device. In the method, the first terminal device may receive second remote control information from a service system over a fourth call connection, where the fourth call connection is a call connection between the first terminal device and a second terminal device; and execute the second remote control information.

In a possible implementation, the method further includes: The first terminal device sends a second request message to the service system, where the second request message may be used by the first terminal device to request the second terminal device to perform remote control over the first terminal device.

In a possible implementation, that the second request message is used by the first terminal device to request the second terminal device to perform remote control over the first terminal device may be specifically: The second request message may include second information, and the second information is used by the first terminal device to request the second terminal device to perform remote control over the first terminal device.

In a possible implementation, before receiving the second remote control information from the service system over the fourth call connection, the first terminal device may further establish the fourth call connection with the service system. For example, that the first terminal device establishes the fourth call connection with the service system may be: receiving the second information and fifth media resource information corresponding to the fourth call connection from the service system, where the second information is used by the first terminal device to request the second terminal device to perform remote control over the first terminal device, and the fifth media resource information indicates a resource used by the service system to send the second remote control information; and sending the second information and sixth media resource information corresponding to the fourth call connection to the service system, where the sixth media resource information indicates a resource used by the first terminal device to receive the second remote control information.

In a possible implementation, the second information may be included in a contact field of a session initiation protocol message; or
the second information may be included in a supported field of a session initiation protocol message; or
the second information may be included in a body field of a session description protocol message.

In a possible implementation, the method may further include: The first terminal device receives a fourth operation from a customer service, where the fourth operation indicates to cancel the remote control performed by the second terminal device over the first terminal device; and sends second indication information to the service system over the fourth call connection based on the fourth operation, where the second indication information indicates to cancel the remote control performed by the second terminal device over the first terminal device.

According to a sixth aspect, an embodiment of this application provides another remote control method. The method may be performed by a second terminal device, or may be performed by a component of the second terminal device. In the method, the second terminal device receives a fifth operation from a subscriber; and sends second remote control information to a service system over a third call connection based on the fifth operation, where the third call connection is a call connection between a first terminal device and the second terminal device.

In a possible implementation, before sending the second remote control information to the service system over the third call connection, the second terminal device may further establish the third call connection with the service system. For example, that the second terminal device establishes the third call connection with the service system may be: receiving seventh media resource information corresponding to the third call connection from the service system, where the seventh media resource information indicates a resource used by the service system to receive the second remote control information; and sending eighth media resource information corresponding to the third call connection to the service system, where the eighth media resource information indicates a resource used by the second terminal device to send the second remote control information.

In a possible implementation, the method may further include: The second terminal device receives second indication information from the service system over the third call connection, where the second indication indicates to cancel remote control performed by the second terminal device over the first terminal device; and cancels the remote control over the first terminal device based on the second indication information.

According to a seventh aspect, an embodiment of this application further provides a communication apparatus. The communication apparatus may be a service system, or may be an electronic device (for example, a chip system) configured in the service system. The communication apparatus includes a corresponding means (means) or module configured to perform the first aspect or any possible implementation, or includes a corresponding means or module configured to perform the fourth aspect or any possible implementation. For example, the communication apparatus includes a processing module (which is also referred to as a processing unit sometimes) and a transceiver module (which is also referred to as a transceiver unit sometimes).

**In** a possible implementation, the communication apparatus includes a storage module (which is also referred to as a storage unit sometimes). The processing module can be coupled to the storage module, and execute a program or an instruction in the storage module, to enable the communication apparatus to perform a function of the service system in the first aspect or the fourth aspect.

According to an eighth aspect, an embodiment of this application further provides a communication apparatus. The communication apparatus may be a first terminal device, or an electronic device (for example, a chip system) configured in the first terminal device. The communication apparatus includes a corresponding means (means) or module configured to perform the second aspect or any possible implementation, or includes a corresponding means or module configured to perform the fifth aspect or any possible implementation. For example, the communication apparatus includes a processing module (which is also referred to as a processing unit sometimes) and a transceiver module (which is also referred to as a transceiver unit sometimes).

**In** a possible implementation, the communication apparatus includes a storage module (which is also referred to as a storage unit sometimes). The processing module can be coupled to the storage module, and execute a program or an instruction in the storage module, to enable the communication apparatus to perform a function of the first terminal device in the second aspect or the fifth aspect.

According to a ninth aspect, an embodiment of this application further provides a communication apparatus. The communication apparatus may be a second terminal device, or may be an electronic device (for example, a chip system) configured in the second terminal device. The communication apparatus includes a corresponding means (means) or module configured to perform the third aspect or any possible implementation, or includes a corresponding means or module configured to perform the sixth aspect or any possible implementation. For example, the communication apparatus includes a processing module (which is also referred to as a processing unit sometimes) and a transceiver module (which is also referred to as a transceiver unit sometimes).

In a possible implementation, the communication apparatus includes a storage module (which is also referred to as a storage unit sometimes). The processing module can be coupled to the storage module, and execute a program or an instruction in the storage module, to enable the communication apparatus to perform a function of the second terminal device in the third aspect or the sixth aspect.

According to a tenth aspect, an embodiment of this application further provides a communication system, including one or more of the communication apparatus according to the seventh aspect, the communication apparatus according to the eighth aspect, and the communication apparatus according to the ninth aspect.

According to an eleventh aspect, an embodiment of this application further provides a communication apparatus, including a processor and a memory. The memory is configured to store one or more computer programs, and the one or more computer programs include computer-executable instructions. When the communication apparatus runs, the processor executes the one or more computer programs stored in the memory, causing the communication apparatus to perform the method according to the first aspect or any possible implementation of the first aspect, the method according to the second aspect or any possible implementation of the second aspect, the method according to the third aspect or any possible implementation of the third aspect, the method according to the fourth aspect or any possible implementation of the fourth aspect, the method according to the fifth aspect or any possible implementation of the fifth aspect, or the method according to the sixth aspect or any possible implementation of the sixth aspect.

Optionally, the communication apparatus further includes other components, for example, an antenna, an input/output module, and an interface. Such components may be hardware, software, or a combination of software and hardware.

According to a twelfth aspect, an embodiment of this application further provides a chip system. The chip system includes a processor and an interface. The processor is configured to invoke instructions from the interface and run the instructions, and when the processor executes the instructions, the method according to any one of the first aspect to the sixth aspect is implemented.

According to a thirteenth aspect, a computer-readable storage medium is provided. The computer-readable storage medium is configured to store a computer program or instructions, and when the computer program or the instructions is/are run, the method according to any one of the first aspect to the sixth aspect is implemented.

According to a fourteenth aspect, a computer program product including instructions is provided. When the computer program product runs on a computer, the method according to any one of the first aspect to the sixth aspect is implemented.

For beneficial effects of the second aspect to the fourteenth aspect, refer to the beneficial effects described in the first aspect. Details are not listed herein.

### BRIEF DESCRIPTION OF DRAWINGS

FIG. 1 is a diagram of a communication system to which an embodiment of this application is applicable;
FIG. 2 is a schematic flowchart of desktop sharing according to an embodiment of this application;
FIG. 3 is a diagram of establishing remote control between a first terminal device and a second terminal device according to an embodiment of this application;
FIG. 4 is a schematic flowchart of a remote control method according to an embodiment of this application;
FIG. 5 is a diagram of an interface of a second terminal device according to an embodiment of this application;
FIG. 6 is a diagram of another interface of a second terminal device according to an embodiment of this application;
FIG. 7 is a schematic flowchart of a remote control method according to an embodiment of this application;
FIG. 8 is a schematic flowchart of another remote control method according to an embodiment of this application;
FIG. 9 is a schematic flowchart of another remote control method according to an embodiment of this application;
FIG. 10 is a diagram of a structure of a communication apparatus according to an embodiment of this application; and
FIG. 11 is a diagram of a structure of another communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The following first explains and describes some terms in embodiments of this application, to facilitate understanding by a person skilled in the art.
1. A terminal device is a device having a wireless transceiver function, and may be a stationary device, a mobile device, a handheld device, a wearable device, a vehicle-mounted device, or a wireless apparatus (for example, a communication module or a chip system) built in the foregoing device. The terminal device is configured to connect a person, an object, a machine, and the like, and may be widely used in various scenarios, for example, including but not limited to the following scenarios: cellular communication, device-to-device (device-to-device, D2D) communication, vehicle to everything (vehicle to everything, V2X), machine-to-machine/machine type communication (machine-to-machine/machine-type communication, M2M/MTC), internet of things (internet of things, IoT), virtual reality (virtual reality, VR), augmented reality (augmented reality, AR), industrial control (industrial control), self-driving (self driving), telemedicine (remote medical), smart grid (smart grid), smart furniture, smart office, smart wearables, smart transportation, smart city (smart city), uncrewed aerial vehicle, robot, and the like. The terminal device may be sometimes referred to as user equipment (user equipment, UE), a terminal, an access station, a UE station, a remote station, a wireless communication device, a user apparatus, or the like.
2. A network device includes, for example, an access network device (or referred to as an access network element) and/or a core network device (or referred to as a core network element).

The access network device is a device having a wireless transceiver function, and is configured to communicate with the terminal device. The access network device includes but is not limited to a base station (BTS, NodeB, eNodeB/eNB, or gNodeB/gNB) in the foregoing communication system, a transmission reception point (transmission reception point, TRP), a subsequent base station evolved based on 3GPP, an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. Multiple base stations may support networks of a same access technology mentioned above, or may support networks of different access technologies mentioned above. The base station may include one or more co-site or non-co-site transmission reception points. The network device may alternatively be a radio controller or a central unit (central unit, CU) in a cloud radio access network (cloud radio access network, C(R)AN) scenario, or may be referred to as an aggregation unit, and/or a distributed unit (distributed unit, DU). Alternatively, the network device may be a server, a wearable device, a vehicle-mounted device, or the like. For example, a network device in the vehicle to everything (vehicle to everything, V2X) technology may be a road side unit (road side unit, RSU). The following uses an example in which the access network device is a base station for description. Multiple network devices in the communication system may be base stations of a same type, or may be base stations of different types. The base station may communicate with the terminal device, or may communicate with the terminal device via a relay station. The terminal device may communicate with the multiple base stations in different access technologies.

The core network element is configured to implement at least one of functions such as mobility management, data processing, session management, and policy and charging. Names of devices that implement core network functions in systems of different access technologies may be different. This is not limited in embodiments of this application. Using a 5G system as an example, the core network device includes an access and mobility management function (access and mobility management function, AMF), a session management function (session management function, SMF), a PCF, a user plane function (user plane function, UPF), and the like.
3. An alerting state refers to a state after a calling party makes a call and before a called party is off-hook.
4. An answered state may also be referred to as a conversation state, and is a state after a calling party makes a call and a called party is off-hook.
5. A computing device is a device having a processing capability. The computing device is, for example, a server or a terminal device.
6. An application is a software module that provides a service, and may run in a terminal device. A form of the application is, for example, an application (application, APP) program, an applet, or a web page pre-installed in the terminal device.

In embodiments of this application, unless otherwise specified, a quantity of a noun indicates "a singular noun or a plural noun", namely, "one or more". "At least one" means one or more, and "multiple" means two or more. The term "and/or" describes an association relationship of associated objects, and indicates that three relationships may exist. For example, A and/or B may indicate the following three cases: Only A exists, both A and B exist, and only B exists. A and B may be singular or plural. The character "/" generally indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one of a, b, or c indicates a, b, c, a and b, a and c, b and c, or a, b, and c, where a, b, and c may be singular or plural.

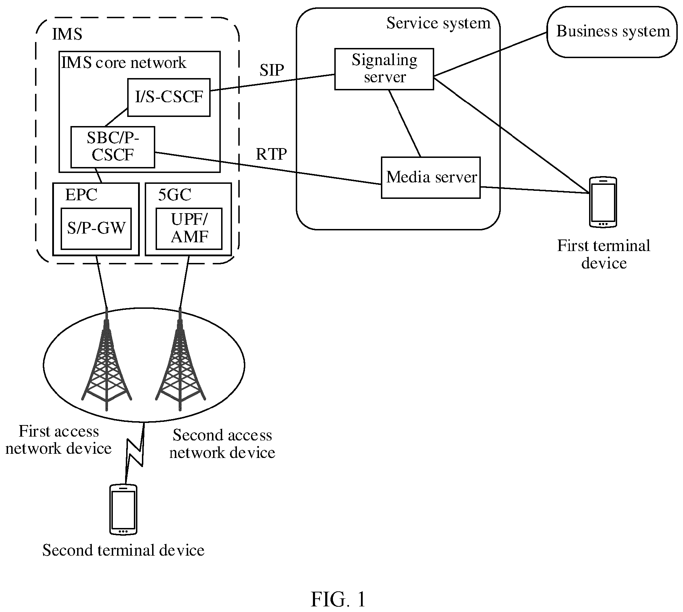

FIG. 1 is a diagram of a scenario to which an embodiment of this application is applicable. Alternatively, FIG. 1 may be understood as a diagram of an architecture of a communication system. As shown in FIG. 1, the scenario includes terminal devices, access network devices, an internet protocol multimedia subsystem (internet protocol multimedia subsystem, IMS) (which may also be referred to as an IMS domain), a service system, and a business system. For implementations of the terminal device and the access network device, refer to the foregoing description.

The following describes a device or a network element in the scenario shown in FIG. 1.
(1) The terminal devices shown in FIG. 1 include a first terminal device and a second terminal device. It may be understood that a quantity of terminal devices in the scenario shown in FIG. 1 is not limited in this embodiment of this application. The first terminal device is a terminal device on a customer service (or agent) side. In other words, the customer service may operate the first terminal device. The second terminal device is a terminal device on a subscriber side. In other words, the subscriber may operate the second terminal device. The first terminal device may communicate with the second terminal device. For example, the first terminal device establishes a call with the second terminal device. In FIG. 1, an example in which the first terminal device and the second terminal device are mobile phones is used.
(2) The IMS may include an evolved packet core network (evolved packet core, EPC), a 5th generation core network (5th generation core, 5GC), and an IMS core (core) network.

For example, the EPC may communicate with the second terminal device via a first access network device. The first access network device may be, for example, a 4G base station. Optionally, the EPC may include a serving/packet data network gateway (serving/packet data network gateway, S/PDN-GW, or S/P-GW). The S/P-GW is a core device in the EPC. The S/P-GW is configured to implement functions provided by a gateway logical entity, and the gateway logical entity includes a serving gateway and a packet data network (packet data network, PDN). The serving gateway transmits service plane data for a device in a radio access network. Devices in the radio access network include the first access network device and a second access network device. The PDN is oriented to another data network, and implements access to and interaction with multiple public data networks. The PDN may be, for example, an anchor in an evolved packet system (evolved packet system, EPS).

For example, the 5GC may communicate with the second terminal device via the second access network device. The second access network device may be, for example, a 5G base station. Optionally, the 5GC includes various network elements, for example, a user plane function (user plane function, UPF) and an access and mobility management function (access and mobility management function, AMF). This is not limited in this embodiment of this application. The UPF is mainly responsible for a user plane function, packet routing and forwarding, policy enforcement, traffic reporting, and quality of service (quality of service, QoS) processing. The AMF is mainly responsible for an access and mobility management function, and performs registration, connection, reachability, and mobility management. The AMF may further provide a session management message transmission channel for the second terminal device and a session management function (session management function, SMF), provide authentication and authorization functions during user access, and serve as a control plane access point between a terminal and a wireless core network.

For example, the IMS core network may communicate with the EPC, or may communicate with the service system. Optionally, the IMS core network may include a call session control function (interrogating-call session control function, I-CSCF), a serving-call session control function (serving-call session control function, S-CSCF), a session border controller (session border controller, SBC), a proxy-call session control function (proxy-call session control functions, P-CSCF), and the like. The I-CSCF and S-CSCF can be abbreviated as I/S-CSCF.

The I-CSCF is a unified initial entry point of the IMS network, and is mainly responsible for assignment and query by the S-CSCF with which the subscriber is registered. The S-CSCF is a central node of the IMS core network, and is used for subscriber registration, authentication control, session routing, service triggering control, and session status maintenance. The SBC provides secure access and media processing. The P-CSCF is an entry node for subscribers to access the IMS core network and is responsible for signaling and message proxy.

(3) The service system may also be referred to as a customer service platform or a customer service system, and includes a signaling server and a media server.

For example, the media server may be configured to be responsible for audio and video media processing and playing, conference application and releasing, audio and video encoding and decoding, desktop sharing, and the like. The media server may communicate with the SBC or the P-CSCF based on a real-time transport protocol (real-time transport protocol, RTP).

For example, the signaling server is configured to be responsible for signaling negotiation and processing, and control the customer service to join and leave a conference. The signaling server may communicate with the I/S-CSCF based on a session initiation protocol (session initiation protocol, SIP).

(4) The business system may be implemented by using one or more computing devices. For descriptions of the computing device, refer to the foregoing content. The business system may be configured to determine and re-invite different service flows according to the calling and called numbers and the access code. The service flows are, for example, video interactive voice recognition (interactive voice recognition, IVR), video call, video advertisement, desktop sharing, enterprise video show, and remote desktop sharing.

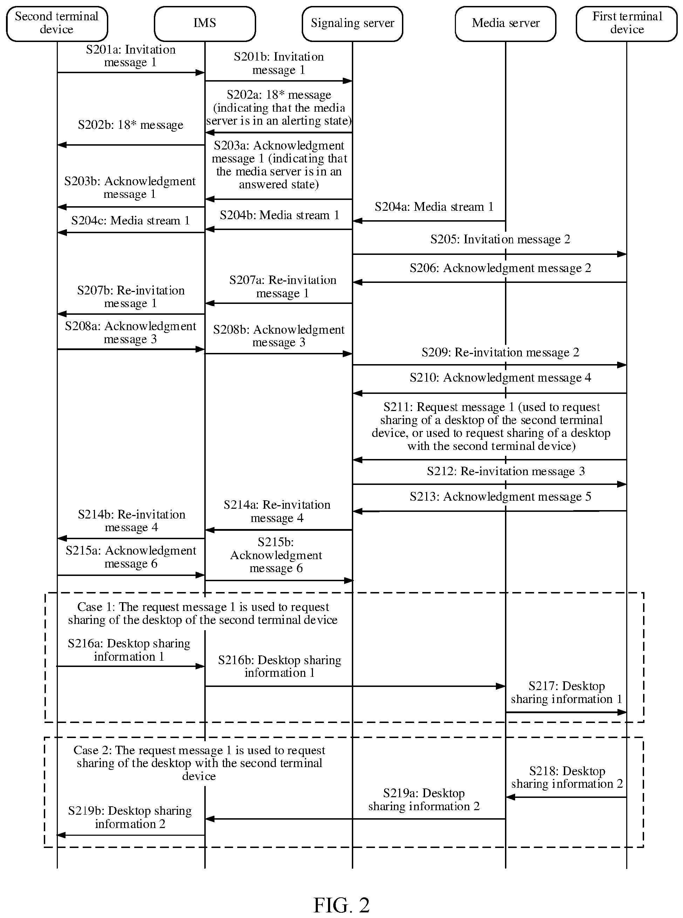

The video IVR and the video human customer service can implement functions such as enterprise video promotion/advertising, remote voice guidance of services, and desktop sharing. The processing flow may be shown in FIG. 2.

FIG. 2 shows a processing procedure of desktop sharing by using the scenario shown in FIG. 1 as an example.

S201: A second terminal device sends an invitation (invite) message 1 to a signaling server. Correspondingly, the signaling server receives the invitation message 1 from the second terminal device. The invitation message 1 is for access to a media server. The invitation message 1 may also be referred to as a request message. A specific name of the message is not limited in this embodiment of this application.

For example, a subscriber dials a customer service access code, and correspondingly, the second terminal device may send the invitation message 1 to the signaling server through a session initiation protocol (session initiation protocol, SIP). The customer service access code may be used to indicate a phone number of the customer service. The invitation message 1 may be a session description protocol (session description protocol, SDP) message.

In an example, S201 includes S201a and S201b. S201a: The second terminal device sends the invitation message 1 to an IMS; and correspondingly, the IMS receives the invitation message 1 from the second terminal device. S201b: The IMS sends the invitation message 1 to the signaling server; and correspondingly, the signaling server receives the invitation message 1 from the IMS.

In an example, in S201a, the second terminal device may send the invitation message 1 to an I-CSCF in the IMS. In addition, in S201b, the IMS may send the invitation message 1 to a service system through transparent transmission.

S202: The signaling server sends an 18* message to the second terminal device. The 18* message indicates that the media server is in an alerting state. For example, after receiving the invitation message 1, the signaling server determines that the media server corresponding to the customer service access code is in an idle state, configures the media server to be in the alerting state, and sends the 18* message to the second terminal device.

In an example, S202 includes S202a and S202b. S202a: The signaling server sends the 18* message to the IMS; and correspondingly, the IMS receives the 18* message from the signaling server. S202b: The IMS sends the 18* message to the second terminal device; and correspondingly, the second terminal device receives the 18* message from the IMS.

In S202b, the IMS may send the 18* message to the second terminal device through transparent transmission.

S203: The signaling server sends an acknowledgment message 1 to the second terminal device. Correspondingly, the second terminal device receives the acknowledgment message 1 from the signaling server. For example, the acknowledgment message 1 indicates that the signaling server determines that the media server establishes communication with the second terminal device. In other words, the acknowledgment message 1 indicates that the media server is in an answered state.

In an example, S203 includes S203a and S203b. S203a: The signaling server sends the acknowledgment message 1 to the IMS; and correspondingly, the IMS receives the acknowledgment message 1 from the signaling server. S203b: The IMS sends the acknowledgment message 1 to the second terminal device; and correspondingly, the second terminal device receives the acknowledgment message 1 from the IMS.

S204: The media server sends a media stream 1 to the second terminal device.

The media stream 1 is, for example, an audio stream. The audio stream is, for example, IVR. The audio stream may be a self-service audio stream, and is used to assist a subscriber in performing an operation. Optionally, the media stream 1 may further include a video stream, for example, an enterprise promotion video. The media stream 1 may be pre-stored in the media server.

In an example, S204 includes S204a, S204b, and S204c. S204a: The media server sends the media stream 1 to the signaling server; and correspondingly, the signaling server receives the media stream 1 from the media server. S204b: The signaling server sends the media stream 1 to the IMS; and correspondingly, the IMS receives the media stream 1 from the signaling server. S204c: The IMS sends the media stream 1 to the second terminal device; and correspondingly, the second terminal device receives the media stream 1 from the IMS.

Optionally, before S204, the signaling server may send, to the media server, indication information (not shown in FIG. 2) that indicates the media server to send the media stream 1 to the second terminal device. Correspondingly, the media server receives the indication information.

S205: The signaling server sends an invitation message 2 to a first terminal device. Correspondingly, the first terminal device receives the invitation message 2 from the signaling server. For example, the invitation message 2 may be used to request the first terminal device to establish a call with the second terminal device.

For example, when the subscriber presses a key or gives a speech instruction to speak to a human customer service, the second terminal device may send a media stream 2 to the media server. For example, the second terminal device may send the media stream 2 to the media server through RTP. The media stream 2 indicates that the subscriber requests to speak to a human customer service. After receiving the media stream 2 from the second terminal device, the media server determines that the subscriber requests to speak to a human customer service. Therefore, the signaling server may allocate a customer service to the subscriber, and send the invitation message 2 to a terminal device (the first terminal device is used as an example in this embodiment of this application) corresponding to the customer service. The invitation message 2 may also be referred to as a request message.

S206: The first terminal device sends an acknowledgment message 2 to the signaling server. Correspondingly, the signaling server receives the acknowledgment message 2 from the first terminal device. The acknowledgment message 2 is used to determine to establish communication with the second terminal device.

S207: The signaling server sends a re-invitation message 1 to the second terminal device. Correspondingly, the second terminal device receives the re-invitation message 1 from the signaling server. The re-invitation message 1 may be used to request re-negotiation with the second terminal device. The re-invitation message may also be represented as a request message.

In an example, S207 includes S207a and S207b. S207a: The signaling server sends the re-invitation message 1 to the IMS; and correspondingly, the IMS receives the re-invitation message 1 from the signaling server. S207b: The IMS sends the re-invitation message 1 to the second terminal device; and correspondingly, the second terminal device receives the re-invitation message 1 from the IMS.

S208: The second terminal device sends an acknowledgment message 3 to the signaling server. Correspondingly, the signaling server receives the acknowledgment message 3 from the second terminal device.

In an example, S208 includes S208a and S208b. S208a: The second terminal device sends the acknowledgment message 3 to the IMS; and correspondingly, the IMS receives the acknowledgment message 3 from the second terminal device. S208b: The IMS sends the acknowledgment message 3 to the signaling server; and correspondingly, the signaling server receives the acknowledgment message 3 from the IMS.

S209: The signaling server sends a re-invitation message 2 to the first terminal device. Correspondingly, the first terminal device receives the re-invitation message 2 from the signaling server. The re-invitation message 2 is used for renegotiation with the first terminal device for a resource.

S210: The first terminal device sends an acknowledgment message 4 to the signaling server. Correspondingly, the signaling server receives the acknowledgment message 4 from the first terminal device.

S211: The first terminal device sends a request message 1 to the signaling server. Correspondingly, the signaling server receives the request message 1 from the first terminal device. The request message 1 is used by the first terminal device to request sharing of a desktop of the second terminal device, or is used by the first terminal device to request sharing of a desktop of the first terminal device with the second terminal device.

S212: The signaling server sends a re-invitation message 3 to the first terminal device. Correspondingly, the first terminal device receives the re-invitation message 3 from the signaling server.

S213: The first terminal device sends an acknowledgment message 5 to the signaling server. Correspondingly, the signaling server receives the acknowledgment message 5 from the first terminal device.

S214: The signaling server sends a re-invitation message 4 to the second terminal device. Correspondingly, the second terminal device receives the re-invitation message 4 from the signaling server.

In an example, S214 may include S214a and S214b. S214a: The signaling server sends the re-invitation message 4 to the IMS; and correspondingly, the IMS receives the re-invitation message 4 from the signaling server. S214b: The IMS sends the re-invitation message 4 to the second terminal device; and correspondingly, the second terminal device receives the re-invitation message 4 from the IMS.

S215: The second terminal device sends an acknowledgment message 6 to the signaling server. Correspondingly, the signaling server receives the acknowledgment message 6 from the second terminal device.

In an example, S215 may include S215a and S215b. S215a: The second terminal device sends the acknowledgment message 6 to the IMS; and correspondingly, the IMS receives the acknowledgment message 6 from the second terminal device. S215b: The IMS sends the acknowledgment message 6 to the signaling server; and correspondingly, the signaling server receives the acknowledgment message 6 from the IMS.

Then, Case 1 and Case 2 exist. Case 1: If the request message 1 in S211 is used by the first terminal device to request sharing of the desktop of the second terminal device, content in S216 and S217 is performed. Case 2: If the request message 1 in S211 is used by the first terminal device to request sharing of the desktop of the first terminal device with the second terminal device, content in S218 and S219 is performed.

S216: The second terminal device sends desktop sharing information 1 to the media server. Correspondingly, the media server receives the desktop sharing information 1 from the second terminal device. The desktop sharing information 1 indicates the desktop of the second terminal device.

In an example, S216 includes S216a and S216b. S216a: The second terminal device sends the desktop sharing information 1 to the IMS; and correspondingly, the IMS receives the desktop sharing information 1 from the second terminal device. S216b: The IMS sends the desktop sharing information 1 to the media server; and correspondingly, the media server receives the desktop sharing information 1 from the IMS.

S217: The media server sends the desktop sharing information 1 to the first terminal device. Correspondingly, the first terminal device receives the desktop sharing information 1 from the media server.

After receiving the desktop sharing information 1, the first terminal device displays the desktop of the second terminal device, implementing sharing of the desktop of the second terminal device.

S218: The first terminal device sends desktop sharing information 2 to the media server. Correspondingly, the media server receives the desktop sharing information 2 from the first terminal device. The desktop sharing information 2 indicates the desktop of the first terminal device.

S219: The media server sends the desktop sharing information 2 to the second terminal device. Correspondingly, the second terminal device receives the desktop sharing information 2 from the media server.

In an example, S219 includes S219a and S219b. S219a: The media server sends the desktop sharing information 2 to the IMS; and correspondingly, the IMS receives the desktop sharing information 2 from the media server. S219b: The IMS sends the desktop sharing information 2 to the second terminal device; and correspondingly, the second terminal device receives the desktop sharing information 2 from the IMS.

After receiving the desktop sharing information 2, the second terminal device displays the desktop of the first terminal device, implementing sharing of the desktop of the first terminal device.

It should be understood that the procedure shown in FIG. 2 is used as an example, and this embodiment of this application is not limited thereto.

In S201 to S204 in FIG. 2, the media server may send the media stream 1 to the second terminal device, where the media stream 1 may be an enterprise promotion video, an enterprise advertisement video, a video or speech for remote service guidance, and the like. In subsequent S205 to S210, a call connection (or a call channel) is established between the first terminal device and the second terminal device, so that the customer service may remotely provide voice guidance for the subscriber to handle a service over the call connection, or may remotely provide voice guidance for the subscriber to handle a service over the call connection and by using the desktop shared by the second terminal device (that is, content implemented in S211 to S217). However, for some complex processes, such voice interaction-based guidance cannot effectively solve problems.

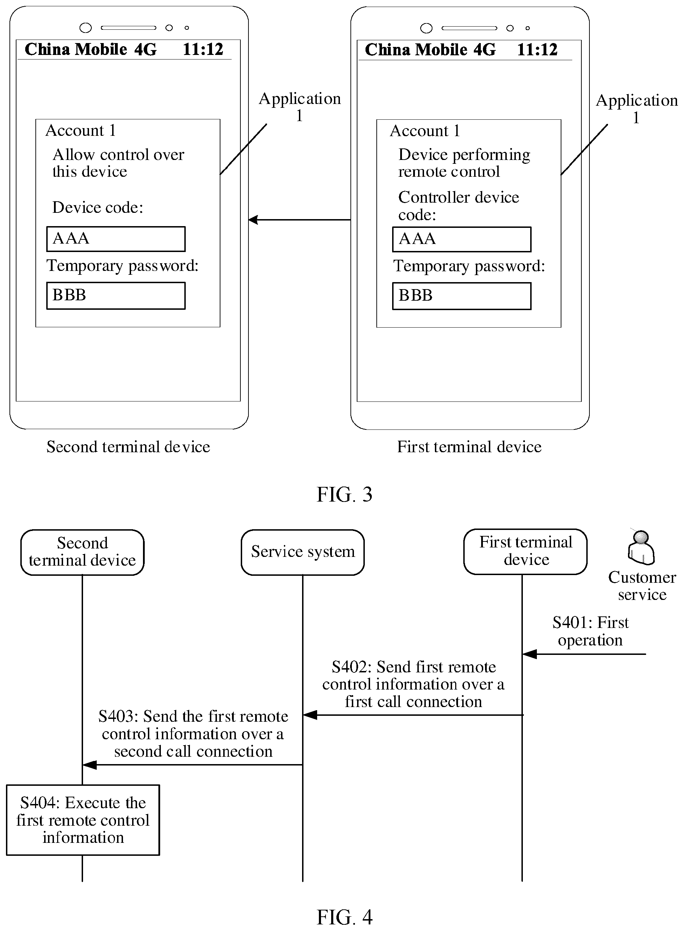

In a possible implementation, the second terminal device grants, to the first terminal device, permission of remote control over the second terminal device. In this way, the customer service may perform remote control over the second terminal device by operating the first terminal device, and help the subscriber handle a service in person, so that the subscriber is efficiently assisted in service handling, improving handling efficiency and reducing a threshold for subscribers to handle services. Currently, remote control is usually implemented by using a remote control application program. For example, a same remote control application program (for example, denoted as an application 1) is installed on the first terminal device and the second terminal device, and the application 1 is run. The subscriber operates the second terminal device, runs the application 1, logs in to an account 1, enables a screen recording option and an option of allowing remote control over the second terminal device, and obtains a device code and a temporary password of the second terminal device (or the subscriber may set a device code and a temporary password of the second terminal device). The customer service operates the first terminal device, runs the application 1, logs in to the account 1, enters the device code and the temporary password of the second terminal device, and establishes a remote control connection with the second terminal device. After the connection is successfully established, the customer service may perform remote control over the second terminal device by operating the first terminal device, as shown in FIG. 3. Remote control in such manner is implemented by logging in to and running a same remote control application program on a subscriber-side terminal device and a customer service-side terminal device. The operation is complex, and an additional remote control application program needs to be installed on the subscriber-side terminal device and the customer service-side terminal device, which is not conducive to popularization.

In view of this, embodiments of this application provide a remote control method and a communication apparatus, to implement remote control performed by a customer service-side terminal device over a subscriber-side terminal device. No additional remote control application program needs to be installed on the customer service-side terminal device and the subscriber-side terminal device. The operation is simple and easy to implement.

The following describes the remote control method in embodiments of this application with reference to the accompanying drawings.

In the accompanying drawings corresponding to embodiments of this application, steps represented by using dashed lines are optional steps. The first terminal device in embodiments of this application is, for example, the first terminal device shown in FIG. 1, the second terminal device is, for example, the second terminal device shown in FIG. 1, the service system is, for example, the service system shown in FIG. 1, and the IMS is, for example, the IMS shown in FIG. 1. In addition, the media server in embodiments of this application is, for example, the media server shown in FIG. 1, and the signaling server is, for example, the signaling server shown in FIG. 1.

FIG. 4 is a schematic flowchart of a remote control method according to an embodiment of this application. In this embodiment, the customer service performs remote control over the second terminal device on the subscriber side by using the first terminal device. The schematic flowchart includes the following steps.

S401: A first terminal device receives a first operation from a customer service.

The first operation is an operation that the customer service performs remote control over a second terminal device by using the first terminal device, for example, an operation on a desktop of the second terminal device. The first operation may be, for example, a key operation, a touchscreen operation, or a voice operation. A specific implementation form of the first operation is not limited in this embodiment of this application. For example, the second terminal device shares the desktop with the first terminal device, and a display interface of the first terminal device may display the desktop of the second terminal device; the customer service performs the first operation on the desktop of the second terminal device displayed on the display interface of the first terminal device; and as a response, the first terminal device receives the first operation from the customer service. For example, after the display interface of the first terminal device displays that a subscriber accepts the remote control from the first terminal device, the customer service may perform the first operation on the desktop of the second terminal device that is displayed on the display interface of the first terminal device.

In a possible implementation, the first terminal device may send a first request message to a service system. Correspondingly, the service system receives the first request message from the first terminal device. The first request message is used by the first terminal device to request remote control over the second terminal device.

In an example, the customer service assists the subscriber in handling a service. After the subscriber authorizes the customer service to share the desktop of the second terminal device, the customer service may operate the first terminal device, and request to obtain permission of remote control over the second terminal device, to guide the subscriber to handle a service in person. For example, the first terminal device may receive a sixth operation from the customer service. The sixth operation is used to obtain the permission of remote control over the second terminal device. The sixth operation may be, for example, a key operation, a touchscreen operation, or a voice operation. This is not limited in this embodiment of this application. The first terminal device generates the first request message based on the sixth operation, and sends the first request message to the service system, to obtain the permission of remote control over the second terminal device.

In another example, the customer service assists the subscriber in handling a service. After the subscriber authorizes the customer service to share the desktop of the second terminal device, the customer service needs to perform remote control over the second terminal device according to a service handling rule. In this case, the first terminal device may send the first request message to the service system, to obtain the permission of remote control over the second terminal device.

It should be understood that, for a specific implementation process in which the subscriber authorizes the customer service to share the desktop of the second terminal device, refer to content of S201 to S217 in FIG. 2. Details are not described herein again. In addition, a trigger condition for sending the first request message by the first terminal device to the service system is not limited in this embodiment of this application.

In a possible implementation, the first request message includes first information, and the first information may be used by the first terminal device to request remote control over the second terminal device. For example, the first information may be a first remote control identifier, and the first remote control identifier indicates the remote control performed by the first terminal device over the second terminal device. In this implementation, the first request message may be used by the first terminal device to request remote control over the second terminal device, or the first information in the first request message may be used to request remote control over the second terminal device. This implementation is flexible.

In an example, the first request message may be an SIP message, that is, the first terminal device may encapsulate (or describe, or encode) the first request message by using the SIP. In this case, the first information may be included in a header (which may also be referred to as a header field) of the SIP message. For example, the first information may be included in a contact (contact) field in the header of the SIP message, or may be included in a supported (supported) field in the header of the SIP message. The contact field is used to indicate (or declare) a capability that the first terminal device expects to support, or indicate (or declare) a capability actually supported by the first terminal device. The supported field is used to indicate (or declare) an actual capability of the first terminal device. In the foregoing example, the first information may be carried in an existing field of the SIP message, and no additional field needs to be added, reducing a change to a format of the SIP message. Certainly, in another possible implementation, the first information may also be carried in a newly added field of the SIP message. This is not specifically limited in this embodiment of this application.

In another example, the first request message may be an SDP message, that is, the first terminal device may encapsulate (or describe, or encode) the first request message by using the SDP. In this case, the first information may be included in a body field in the SDP message. For example, the first information may be included in an a= field in an m= line of the SDP message. The m= line is used to indicate (or declare) information corresponding to a service type supported by the first terminal device, for example, indicate information (such as a port number) corresponding to a video service supported by the first terminal device. The a= field may be used to indicate (or declare) that the first terminal device requests remote control over the second terminal device. In the foregoing example, the first information may be carried in an existing field of the SDP message, and no additional field needs to be added, reducing a change to a format of the SDP message. Certainly, in another possible implementation, the first information may also be carried in a newly added field of the SDP message. This is not specifically limited in this embodiment of this application.

In another possible implementation, the first request message may further include third information, and the third information may indicate the second terminal device to share the desktop with the first terminal device. For example, the third information may be a first desktop sharing identifier, and the first desktop sharing identifier indicates the second terminal device to share the desktop with the first terminal device. Similarly, the third information may be included in a contact field of an SIP message, or included in a supported field of an SIP message, or included in a body field of an SDP message. For details, refer to descriptions of the first information, and details are not described herein again.

S402: The first terminal device sends first remote control information to the service system over a first call connection. Correspondingly, the service system receives the first remote control information from the first terminal device over the first call connection.

In S402, the first terminal device may respond to the first operation of the customer service and generate the first remote control information based on the first operation, and send the first remote control information to the service system over the first call connection. In this embodiment of this application, the first remote control information is used by the first terminal device for remote control over the second terminal device, for example, perform an operation on the desktop of the second terminal device. It should be understood that content of the first remote control information is not limited in this embodiment of this application.

The first call connection may also be referred to as a call channel, for example, a VoLTE call channel. The call channel may be a channel for an interactive subscriber session. The interactive subscriber session may be used to implement interaction of multimedia elements. The multimedia is, for example, one or more of a video, an image, and audio. Communication of the interactive subscriber session may include video call, interactive voice recognition (interactive voice recognition, IVR), audio call, instant messaging, online game, virtual reality, or the like. The first call connection is a call connection between the first terminal device and the second terminal device. Specifically, the first call connection may be a call connection between the first terminal device and the service system in the call connection between the first terminal device and the second terminal device. The first call connection may be an established call connection, for example, a call connection that is between the first terminal device and the service system and that is for transmitting shared desktop information of the second terminal device; or the first call connection may be a call connection established by the service system with the first terminal device in response to the first request message.

For example, the service system may establish the first call connection with the first terminal device in response to the first request message. For example, the service system may establish the first call connection with the first terminal device in the following manner: The service system sends first media resource information corresponding to the first call connection to the first terminal device, and correspondingly, the first terminal device receives the first media resource information from the service system. The first terminal device sends second media resource information corresponding to the first call connection to the service system, and correspondingly, the service system receives the second media resource information from the first terminal device. At this point, the first call connection is established.

The first media resource information may indicate a resource used by the service system to receive the first remote control information from the first terminal device. The first media resource information may include, for example, one or more of an internet protocol (internet protocol, IP) address, a video port number, an audio port number, an audio encoding resource, an audio decoding resource, a video encoding resource, and a video decoding resource of the service system. For example, the first media resource information may indicate a resource used by a signaling server to receive the first remote control information from the first terminal device. Correspondingly, the first media resource information may include one or more of an IP address, a video port number, an audio port number, an audio encoding resource, an audio decoding resource, a video encoding resource, and a video decoding resource of the signaling server. The first media resource information may be included in a re-invitation message. Optionally, the first media resource information may be included in an SDP message.

The second media resource information may indicate a resource used by the first terminal device to send the first remote control information. The second media resource information may include, for example, one or more of an IP address, a video port number, an audio port number, an audio encoding resource, an audio decoding resource, a video encoding resource, and a video decoding resource of the first terminal device. The second media resource information may be included in an acknowledgment message. Optionally, the second media resource information may be included in an SDP message.

S403: The service system sends the first remote control information to the second terminal device over a second call connection. Correspondingly, the second terminal device receives the first remote control information from the service system over the second call connection.

After receiving the first remote control information, the service system may send the first remote control information to the second terminal device over the second call connection. Specifically, the service system may send the first remote control information to an IMS. Correspondingly, the IMS receives the first remote control information, and transmits the first remote control information to the second terminal device through transparent transmission.

The second call connection may also be referred to as a call channel, for example, a VoLTE call channel. For descriptions of the call channel, refer to the foregoing content. Details are not described herein again. The second call connection is a call connection between the first terminal device and the second terminal device. Specifically, the second call connection may be a call connection between the second terminal device and the service system in the call connection between the first terminal device and the second terminal device. The second call connection may be an established call connection, for example, a call connection that is between the second terminal device and the service system and that is for transmitting shared desktop information of the second terminal device; or the second call connection may be a call connection established by the service system with the second terminal device in response to the first request message.

For example, the service system may establish the second call connection with the second terminal device. For example, the service system may establish the second call connection with the second terminal device after establishing the first call connection with the first terminal device. For example, the service system may establish the second call connection with the second terminal device in the following manner: The service system sends the first information and third media resource information corresponding to the second call connection to the second terminal device, and correspondingly, the second terminal device receives the first information and the third media resource information from the service system. The second terminal device sends the first information and fourth media resource information corresponding to the second call connection to the service system, and correspondingly, the service system receives the first information and the fourth media resource information from the second terminal device. At this point, the second call connection is established.

The third media resource information may indicate a resource used by the service system to send the first remote control information of the first terminal device. The third media resource information may include, for example, one or more of an IP address, a video port number, an audio port number, an audio encoding resource, an audio decoding resource, a video encoding resource, and a video decoding resource of the service system. For example, the third media resource information may indicate a resource used by the signaling server to send the first remote control information of the first terminal device. Correspondingly, the third media resource information may include one or more of an IP address, a video port number, an audio port number, an audio encoding resource, an audio decoding resource, a video encoding resource, and a video decoding resource of the signaling server. The third media resource information may be included in a re-invitation message. Optionally, the third media resource information may be included in an SDP message. The first information sent by the service system may be included in a contact field of an SIP message, or included in a supported field of an SIP message, or included in a body field of an SDP message. For details, refer to the foregoing descriptions. Details are not described herein again.

The fourth media resource information may indicate a resource used by the second terminal device to receive the first remote control information. The fourth media resource information may include, for example, one or more of an IP address, a video port number, an audio port number, an audio encoding resource, an audio decoding resource, a video encoding resource, and a video decoding resource of the second terminal device. The fourth media resource information may be included in an acknowledgment message. Optionally, the fourth media resource information may be included in an SDP message. The first information sent by the second terminal device may be included in a contact field of an SIP message, or included in a supported field of an SIP message, or included in a body field of an SDP message. For details, refer to the foregoing descriptions. Details are not described herein again.

In a possible implementation, in a process of establishing the second call connection, the service system may further send third information to the second terminal device, and correspondingly, the second terminal device receives the third information from the service system. The second terminal device sends the third information to the service system, and correspondingly, the service system receives the third information from the second terminal device. For related descriptions of the third information, refer to the foregoing content. Details are not described herein again.

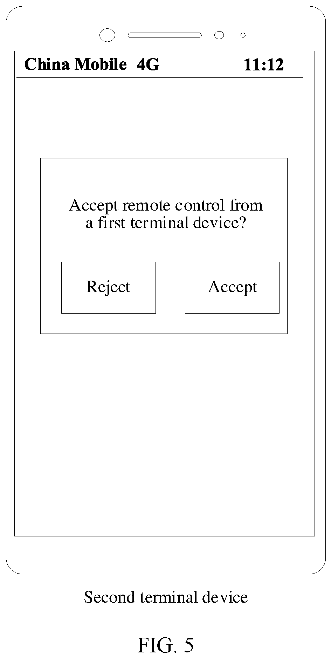

In another possible implementation, before sending the first information and the fourth media resource information corresponding to the second call connection to the service system, the second terminal device may further receive a second operation from the subscriber, where the second operation indicates to accept remote control performed by the first terminal device over the second terminal device, or agreeing to authorizing (allowing) remote control from the first terminal device. For example, after receiving the first information from the service system, the second terminal device may display prompt information, play a voice prompt, or the like, to remind of whether remote control from the first terminal device is allowed, as shown in FIG. 5. If the subscriber selects an accept option (that is, the second operation), the second terminal device may send the first information and the fourth media resource information corresponding to the second call connection to the service system. If the subscriber selects a reject option, the second terminal device may send, to the service system, indication information indicating that the subscriber declines the remote control from the first terminal device, and further, establishment of the second call connection fails. In this embodiment of this application, an example in which the subscriber accepts the remote control from the first terminal device is used for description.

S404: The second terminal device executes the first remote control information.

After receiving the first remote control information, the second terminal device may execute the first remote control information. For example, if the first remote control information indicates to start an application 1 installed on the second terminal device, the second terminal device starts the application 1. For another example, if the first remote control information indicates to close an application 2 started by the second terminal device, the second terminal device closes the application 2. For another example, if the first remote control information indicates an electronic signature at a corresponding location, the second terminal device displays the electronic signature at the corresponding location. Optionally, the second terminal device may feed back an execution result of the first remote control information to the first terminal device. For example, the second terminal device sends the execution result to the IMS, the IMS transparently transmits the execution result to the service system after receiving the execution result, and then the service system sends the execution result to the first terminal device, where the display interface of the first terminal device may display the execution result.

In a possible implementation, the second terminal device may receive a third operation from the subscriber, where the third operation is used to cancel the remote control performed by the first terminal device over the second terminal device. The second terminal device sends first indication information to the service system over the second call connection based on the third operation, where the first indication information may indicate to cancel the remote control performed by the first terminal device over the second terminal device. After receiving the first indication information, the service system sends the first indication information to the first terminal device over the first call connection. After receiving the first indication information, the first terminal device cancels the remote control over the second terminal device based on the first indication information, that is, returns to desktop sharing from remote control. The customer service may view the desktop of the second terminal device by using the display interface of the first terminal device, but cannot perform remote control over the second terminal device.

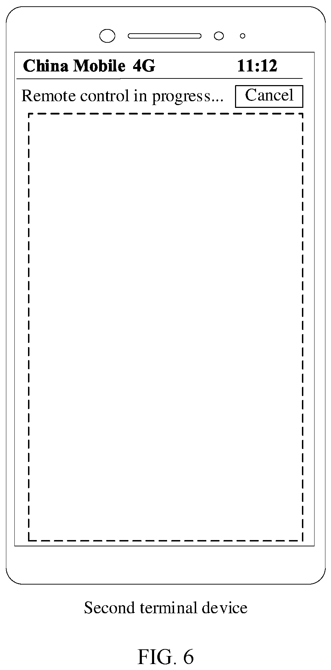

FIG. 6 is a diagram of an interface of a second terminal device according to an embodiment of this application. As shown in FIG. 6, the second terminal device displays remote control in progress and a cancel option. If the subscriber selects the cancel option, it is equivalent to performing the third operation, and the second terminal device sends the first indication information to the service system in response to the third operation.

In another possible implementation, the first terminal device may alternatively actively cancel the remote control over the second terminal device. For example, the first terminal device may cancel the remote control over the second terminal device in response to an operation of canceling the remote control over the second terminal device by the customer service. For another example, the first terminal device may cancel the remote control over the second terminal device according to a service requirement.

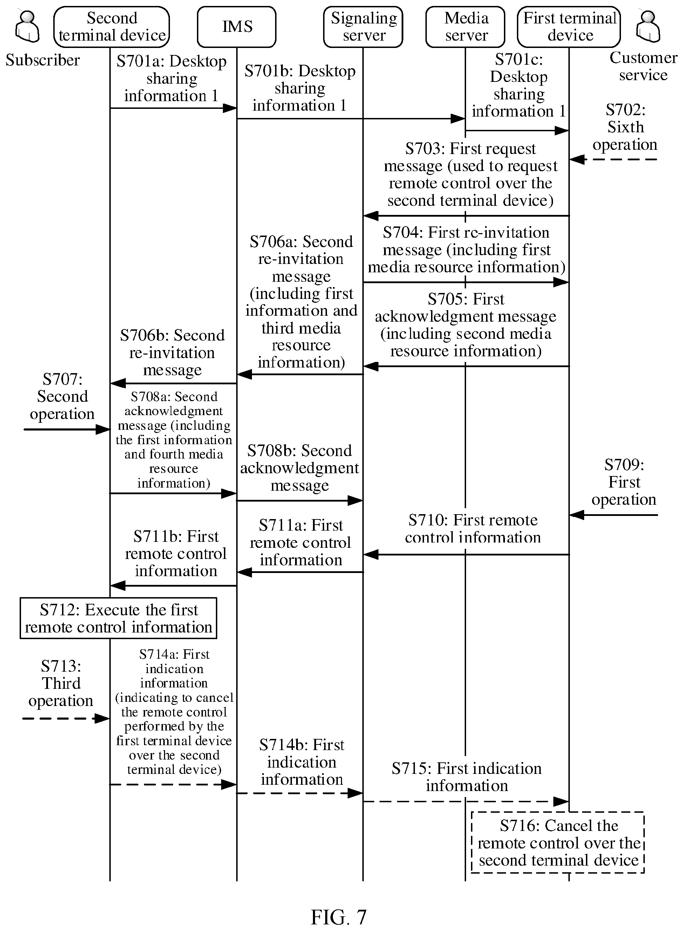

In a possible implementation, the service system includes a signaling server and a media server. The following describes an example of interaction between a signaling server and a media server with reference to a schematic flowchart of a remote control method shown in FIG. 7. The schematic flowchart includes the following steps.

S701: A second terminal device shares a desktop with a first terminal device.

In an example, S701 includes S701a, S701b, and S701c. S701a: The second terminal device sends desktop sharing information 1 to an IMS; and correspondingly, the IMS receives the desktop sharing information 1 from the second terminal device. S701b: The IMS sends the desktop sharing information 1 to a media server; and correspondingly, the media server receives the desktop sharing information 1 from the IMS. S701c: The media server sends the desktop sharing information 1 to the first terminal device; and correspondingly, the first terminal device receives the desktop sharing information 1 from the media server. The desktop sharing information 1 may indicate a desktop of the second terminal device. For a specific implementation process of S701, refer to content of S201 to S217 in FIG. 2. Details are not described herein again.

S702: The first terminal device receives a sixth operation from a customer service. The sixth operation is used to request to perform remote control over the second terminal device. The first terminal device may send a first request message to a signaling server in response to the sixth operation of the customer service, or may actively send a first request message to a signaling server according to a service requirement. Therefore, S702 is an optional step.

S703: The first terminal device sends the first request message to the signaling server; and correspondingly, the signaling server receives the first request message from the first terminal device.

The first request message is used by the first terminal device to request remote control over the second terminal device. Optionally, the first request message includes first information. The first information may be used by the first terminal device to request remote control over the second terminal device. The first information is included in a contact field of an SIP message, or included in a supported field of an SIP message, or included in a body field of an SDP message.

S704: The signaling server sends a first re-invitation message to the first terminal device; and correspondingly, the first terminal device receives the first re-invitation message from the signaling server.

The first re-invitation message is used to renegotiate a resource for transmitting first remote control information between the signaling server and the first terminal device, or used to negotiate to establish a first call connection, or used to renegotiate a call resource between the first terminal device and the second terminal device. The first re-invitation message includes first media resource information corresponding to the first call connection. Optionally, the first media resource information is included in an SDP message. For descriptions of the first media resource information, refer to related content in FIG. 4. Details are not described herein again.

S705: The first terminal device sends a first acknowledgment message to the signaling server; and correspondingly, the signaling server receives the first acknowledgment message from the first terminal device.

The first acknowledgment message is used to determine a resource for transmitting the first remote control information between the signaling server and the first terminal device. The first acknowledgment message includes second media resource information corresponding to the first call connection. Optionally, the second media resource information is included in an SDP message. For descriptions of the second media resource information, refer to related content in FIG. 4. Details are not described herein again.

At this point, the first call connection is established.

S706: The signaling server sends a second re-invitation message to the second terminal device; and correspondingly, the second terminal device receives the second re-invitation message from the signaling server.

The second re-invitation message is used to renegotiate a resource for transmitting the first remote control information between the signaling server and the second terminal device, or used to negotiate to establish a second call connection, or used to renegotiate a call resource between the first terminal device and the second terminal device. The second re-invitation message may include the first information and third media resource information corresponding to the second call connection. The first information may be included in a contact field of an SIP message, or included in a supported field of an SIP message, or included in a body field of an SDP message. Optionally, the third media resource information is included in an SDP message. Optionally, the second re-invitation message may further include third information. For descriptions of the third media resource information and the third information, refer to related content in FIG. 4. Details are not described herein again.

In an example, S706 includes S706a and S706b. S706a: The signaling server sends the second re-invitation message to the IMS; and correspondingly, the IMS receives the second re-invitation message from the signaling server. S706b: The IMS sends the second re-invitation message to the second terminal device; and correspondingly, the second terminal device receives the second re-invitation message from the IMS.

S707: The second terminal device receives a second operation from a subscriber. The second operation indicates to accept the remote control performed by the first terminal device over the second terminal device.

S708: The second terminal device sends a second acknowledgment message to the signaling server; and correspondingly, the signaling server receives the second acknowledgment message from the second terminal device.

The second acknowledgment message is used to determine a resource for transmitting the first remote control information between the signaling server and the second terminal device. The second acknowledgment message includes the first information and fourth media resource information corresponding to the second call connection. The first information may be included in a contact field of an SIP message, or included in a supported field of an SIP message, or included in a body field of an SDP message. Optionally, the fourth media resource information is included in an SDP message. Optionally, the second acknowledgment message may further include the third information. For descriptions of the fourth media resource information, refer to related content in FIG. 4. Details are not described herein again.

In an example, S708 includes S708a and S708b. S708a: The second terminal device sends the second acknowledgment message to the IMS; and correspondingly, the IMS receives the second acknowledgment message from the second terminal device. S708b: The IMS sends the second acknowledgment message to the signaling server; and correspondingly, the signaling server receives the second acknowledgment message from the IMS.

At this point, the second call connection is established.

S709: The first terminal device receives a first operation from the customer service. The first operation is an operation that the customer service performs remote control over the second terminal device by using the first terminal device.

S710: The first terminal device sends the first remote control information to the signaling server; and correspondingly, the signaling server receives the first remote control information from the first terminal device. For example, the first terminal device generates the first remote control information in response to the first operation of the customer service, and sends the first remote control information to the signaling server over the first call connection.

S711: The signaling server sends the first remote control information to the second terminal device; and correspondingly, the second terminal device receives the first remote control information from the signaling server. For example, the signaling server sends the first remote control information to the second terminal device over the second call connection.

In an example, S711 includes S711a and S711b. S711a: The signaling server sends the first remote control information to the IMS; and correspondingly, the IMS receives the first remote control information from the signaling server. S711b: The IMS sends the first remote control information to the second terminal device; and correspondingly, the second terminal device receives the first remote control information from the IMS.

S712: The second terminal device executes the first remote control information.

S713: The second terminal device receives a third operation from the subscriber. The third operation indicates to cancel the remote control performed by the first terminal device over the second terminal device.

S714: The second terminal device sends first indication information to the signaling server; and correspondingly, the signaling server receives the first indication information from the second terminal device. The first indication information may indicate to cancel the remote control performed by the first terminal device over the second terminal device.

In an example, S714 includes S714a and S714b. S714a: The second terminal device sends the first indication information to the IMS; and correspondingly, the IMS receives the first indication information from the second terminal device. S714b: The IMS sends the first indication information to the signaling server; and correspondingly, the signaling server receives the first indication information from the IMS.

S715: The signaling server sends the first indication information to the first terminal device. Correspondingly, the first terminal device receives the first indication information from the signaling server.

S716: The first terminal device cancels the remote control over the second terminal device. For example, the first terminal device cancels the remote control over the second terminal device based on the first indication information.

It should be understood that the first terminal device may cancel the remote control over the second terminal device in response to the first indication information of the second terminal device, or may actively cancel the remote control over the second terminal device. Therefore, S713 to S716 are optional steps.

For a specific implementation process in FIG. 7, refer to related content in FIG. 4. Details are not described herein again.

In the foregoing embodiments of this application, the service system sends the first remote control information of the first terminal device to the second terminal device over a call connection between the first terminal device and the second terminal device, so that the first terminal device implements remote control over the second terminal device. No remote control application program needs to be installed on the first terminal device and the second terminal device, saving storage resources of the terminal device. The operation is simple and easy to implement.

FIG. 4 to FIG. 7 describe remote control performed by the first terminal device over the second terminal device. The following describes, with reference to the accompanying drawings, remote control performed by the second terminal device over the first terminal device.

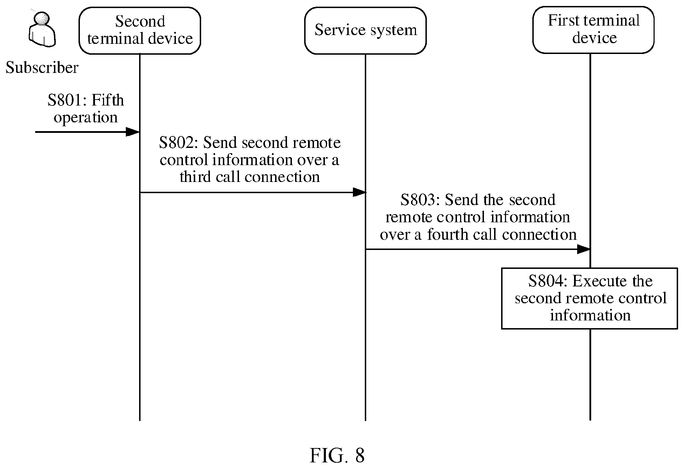

FIG. 8 is a schematic flowchart of another remote control method according to an embodiment of this application. In this embodiment, a subscriber performs remote control over a first terminal device on a customer service side by using a second terminal device. The schematic flowchart includes the following steps.

S801: A second terminal device receives a fifth operation from a subscriber.

The fifth operation is an operation that the subscriber performs remote control over a first terminal device by using the second terminal device, for example, an operation on a desktop of the first terminal device. The fifth operation may be, for example, a key operation, a touchscreen operation, or a voice operation. A specific implementation form of the fifth operation is not limited in this embodiment of this application. For example, the first terminal device shares the desktop with the second terminal device, and a display interface of the second terminal device may display the desktop of the first terminal device; the subscriber performs the fifth operation on the desktop of the first terminal device displayed on the display interface of the second terminal device; and as a response, the second terminal device receives the fifth operation from the subscriber.

In a possible implementation, the first terminal device may send a second request message to a service system. Correspondingly, the service system receives the second request message from the first terminal device. The second request message is used by the first terminal device to request the second terminal device to perform remote control over the first terminal device.

In an example, the customer service assists the subscriber in handling a service. After the customer service authorizes the subscriber to share the desktop of the first terminal device, the customer service may operate the first terminal device, and authorize the second terminal device for remote control over the first terminal device, so that the subscriber completes a service handling procedure such as executing a signature. For example, the first terminal device may receive a seventh operation from the customer service, where the seventh operation is used to grant, to the second terminal device, permission of remote control over the first terminal device, and the seventh operation may be, for example, a key operation, a touchscreen operation, or a voice operation. This is not limited in this embodiment of this application. The first terminal device generates the second request message based on the seventh operation, and sends the second request message to the service system, to grant, to the second terminal device, the permission of remote control over the first terminal device.

In another example, the customer service assists the subscriber in handling a service. After the customer service authorizes the subscriber to share the desktop of the first terminal device, the subscriber needs to perform remote control over the first terminal device according to a service handling rule. In this case, the first terminal device may send the second request message to the service system, to grant, to the second terminal device, the permission of remote control over the first terminal device.

It should be understood that, for a specific implementation process in which the customer service authorizes the subscriber to share the desktop of the first terminal device, refer to content of S201 to S215, S218, and S219 in FIG. 2. Details are not described herein again. In addition, a trigger condition for sending the second request message by the first terminal device to the service system is not limited in this embodiment of this application.

In a possible implementation, the second request message includes second information, and the second information may be used by the first terminal device to request the second terminal device to perform remote control over the first terminal device. For example, the second information may be a second remote control identifier, and the second remote control identifier indicates the remote control performed by the second terminal device over the first terminal device. In this implementation, the second request message may be used by the first terminal device to request the second terminal device to perform remote control over the first terminal device, or the second information in the second request message may be used to request the second terminal device to perform remote control over the first terminal device. This implementation is flexible.

In an example, the second request message may be an SIP message, that is, the first terminal device may encapsulate (or describe, or encode) the second request message by using the SIP. In this case, the second information may be included in a header (which may also be referred to as a header field) of the SIP message. For example, the second information may be included in a contact (contact) field in the header of the SIP message, or may be included in a supported (supported) field in the header of the SIP message. The contact field is used to indicate (or declare) a capability that the first terminal device expects to support, or indicate (or declare) a capability actually indicated by the first terminal device. The supported field is used to indicate (or declare) an actual capability of the first terminal device. In the foregoing example, the second information may be carried in an existing field of the SIP message, and no additional field needs to be added, reducing a change to a format of the SIP message. Certainly, in another possible implementation, the second information may also be carried in a newly added field of the SIP message. This is not specifically limited in this embodiment of this application.

In another example, the second request message may be an SDP message, that is, the first terminal device may encapsulate (or describe, or encode) the second request message by using the SDP. In this case, the second information may be included in a body field of the SDP message. For example, the second information may be included in a b= field in an m= line of the SDP message. The m= line is used to indicate (or declare) information corresponding to a service type supported by the first terminal device, for example, indicate information (such as a port number) corresponding to a video service supported by the first terminal device. The b= field may be used to indicate (or declare) that the first terminal device requests the second terminal device to perform remote control over the first terminal device. In the foregoing example, the second information may be carried in an existing field of the SDP message, and no additional field needs to be added, reducing a change to a format of the SDP message. Certainly, in another possible implementation, the second information may also be carried in a newly added field of the SDP message. This is not specifically limited in this embodiment of this application.

In another possible implementation, the second request message may further include fourth information, and the fourth information may indicate the first terminal device to share the desktop with the second terminal device. For example, the fourth information may be a second desktop sharing identifier, and the second desktop sharing identifier indicates the first terminal device to share the desktop with the second terminal device. Similarly, the fourth information may be included in a contact field of an SIP message, or included in a supported field of an SIP message, or included in a body field of an SDP message. For details, refer to descriptions of the second information, and details are not described herein again.

S802: The second terminal device sends second remote control information to the service system over a third call connection. Correspondingly, the service system receives the second remote control information from the second terminal device over the third call connection.

S803: The service system sends the second remote control information to the first terminal device over a fourth call connection. Correspondingly, the first terminal device receives the second remote control information from the service system over the fourth call connection.

In S802, the second terminal device may respond to the fifth operation of the subscriber and generate the second remote control information based on the fifth operation, and send the second remote control information to the service system over the third call connection. Further, after receiving the second remote control information, the service system may send the second remote control information to the first terminal device over the fourth call connection. In this embodiment of this application, the second remote control information is used by the second terminal device for remote control over the first terminal device, for example, perform an operation on the desktop of the first terminal device. It should be understood that content of the second remote control information is not limited in this embodiment of this application.

The third call connection may also be referred to as a call channel, for example, a VoLTE call channel. For descriptions of the call channel, refer to related content in S402. Details are not described herein again. The third call connection is a call connection between the first terminal device and the second terminal device. Specifically, the third call connection may be a call connection between the second terminal device and the service system in the call connection between the first terminal device and the second terminal device. The third call connection may be an established call connection, for example, a call connection that is between the second terminal device and the service system and that is for transmitting shared desktop information of the first terminal device; or the third call connection may be a call connection established by the service system with the second terminal device in response to the second request message.

The fourth call connection may also be referred to as a call channel, for example, a VoLTE call channel. For descriptions of the call channel, refer to related content in S402. Details are not described herein again. The fourth call connection is a call connection between the first terminal device and the second terminal device. Specifically, the fourth call connection may be a call connection between the first terminal device and the service system in the call connection between the first terminal device and the second terminal device. The fourth call connection may be an established call connection, for example, a call connection that is between the first terminal device and the service system and that is for transmitting shared desktop information of the first terminal device; or the fourth call connection may be a call connection established by the service system with the first terminal device in response to the second request message.

For example, the service system may establish the fourth call connection with the first terminal device in response to the second request message. For example, the service system may establish the fourth call connection with the first terminal device in the following manner: The service system sends the second information and fifth media resource information corresponding to the fourth call connection to the first terminal device, and correspondingly, the first terminal device receives the second information and the fifth media resource information from the service system. The first terminal device sends the second information and sixth media resource information corresponding to the fourth call connection to the service system, and correspondingly, the service system receives the second information and the sixth media resource information from the first terminal device. At this point, the fourth call connection is established.

The fifth media resource information may indicate a resource used by the service system to send the second remote control information of the second terminal device. The fifth media resource information may include, for example, one or more of an IP address, a video port number, an audio port number, an audio encoding resource, an audio decoding resource, a video encoding resource, and a video decoding resource of the service system. For example, the fifth media resource information may indicate a resource used by a signaling server to send the second remote control information of the second terminal device. Correspondingly, the fifth media resource information may include one or more of an IP address, a video port number, an audio port number, an audio encoding resource, an audio decoding resource, a video encoding resource, and a video decoding resource of the signaling server. The fifth media resource information may be included in a re-invitation message. Optionally, the fifth media resource information may be included in an SDP message. The second information sent by the service system may be included in a contact field of an SIP message, or included in a supported field of an SIP message, or included in a body field of an SDP message. For details, refer to the foregoing descriptions. Details are not described herein again.

The sixth media resource information may indicate a resource used by the first terminal device to receive the second remote control information. The sixth media resource information may include, for example, one or more of an IP address, a video port number, an audio port number, an audio encoding resource, an audio decoding resource, a video encoding resource, and a video decoding resource of the first terminal device. The sixth media resource information may be included in an acknowledgment message. Optionally, the sixth media resource information may be included in an SDP message. The second information sent by the first terminal device may be included in a contact field of an SIP message, or included in a supported field of an SIP message, or included in a body field of an SDP message. For details, refer to the foregoing descriptions. Details are not described herein again.

In a possible implementation, in a process of establishing the fourth call connection, the service system may further send fourth information to the first terminal device, and correspondingly, the first terminal device receives the fourth information from the service system. The first terminal device sends the fourth information to the service system, and correspondingly, the service system receives the fourth information from the first terminal device. For related descriptions of the fourth information, refer to the foregoing content. Details are not described herein again.

For example, the service system may establish the third call connection with the second terminal device. For example, the service system may establish the third call connection with the second terminal device after establishing the fourth call connection with the first terminal device. For example, the service system may establish the third call connection with the second terminal device in the following manner: The service system sends seventh media resource information corresponding to the third call connection to the second terminal device, and correspondingly, the second terminal device receives the seventh media resource information from the service system. The second terminal device sends eighth media resource information corresponding to the third call connection to the service system, and correspondingly, the service system receives the eighth media resource information from the second terminal device. At this point, the third call connection is established.

The seventh media resource information may indicate a resource used by the service system to receive the second remote control information from the second terminal device. The seventh media resource information may include, for example, one or more of an IP address, a video port number, an audio port number, an audio encoding resource, an audio decoding resource, a video encoding resource, and a video decoding resource of the service system. For example, the seventh media resource information may indicate a resource used by the signaling server to receive the second remote control information from the second terminal device. Correspondingly, the seventh media resource information may include one or more of an IP address, a video port number, an audio port number, an audio encoding resource, an audio decoding resource, a video encoding resource, and a video decoding resource of the signaling server. The seventh media resource information may be included in a re-invitation message. Optionally, the seventh media resource information may be included in an SDP message.

The eighth media resource information may indicate a resource used by the second terminal device to send the second remote control information. The eighth media resource information may include, for example, one or more of an IP address, a video port number, an audio port number, an audio encoding resource, an audio decoding resource, a video encoding resource, and a video decoding resource of the second terminal device. The eighth media resource information may be included in an acknowledgment message. Optionally, the eighth media resource information may be included in an SDP message.

S804: The first terminal device executes the second remote control information.

For a specific implementation process of S804, refer to content of S404. Details are not described herein again.

In a possible implementation, the first terminal device may receive a fourth operation from the customer service, where the fourth operation is used to cancel the remote control performed by the second terminal device over the first terminal device. The first terminal device sends second indication information to the service system over the fourth call connection based on the fourth operation, where the second indication information may indicate to cancel the remote control performed by the second terminal device over the first terminal device. After receiving the second indication information, the service system sends the second indication information to the second terminal device over the third call connection. After receiving the second indication information, the second terminal device cancels the remote control over the first terminal device based on the second indication information, that is, returns to desktop sharing from remote control. The subscriber may view the desktop of the first terminal device by using the display interface of the second terminal device, but cannot perform remote control over the first terminal device.

In another possible implementation, the second terminal device may alternatively actively cancel the remote control over the first terminal device. For example, the second terminal device may cancel the remote control over the first terminal device in response to an operation of canceling the remote control over the first terminal device by the subscriber. For another example, the second terminal device may cancel the remote control over the first terminal device according to a service requirement.

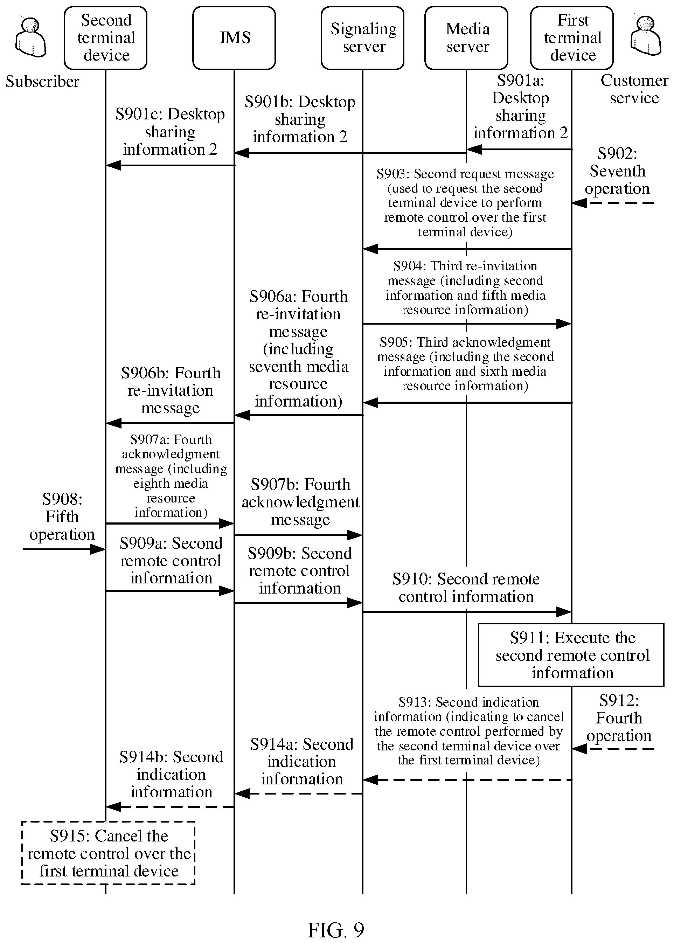

In a possible implementation, the service system includes a signaling server and a media server. The following describes an example of interaction between a signaling server and a media server with reference to a schematic flowchart of a remote control method shown in FIG. 9. The schematic flowchart includes the following steps.

S901: A first terminal device shares a desktop with a second terminal device.

In an example, S901 includes S901a, S901b, and S901c. S901a: The first terminal device sends desktop sharing information 2 to a media server; and correspondingly, the media server receives the desktop sharing information 2 from the first terminal device. S901b: The media server sends the desktop sharing information 2 to an IMS; and correspondingly, the IMS receives the desktop sharing information 2 from the media server. S901c: The IMS sends the desktop sharing information 2 to the second terminal device; and correspondingly, the second terminal device receives the desktop sharing information 2 from the IMS. For a specific implementation process of S901, refer to content of S201 to S215, S218, and S219 in FIG. 2. Details are not described herein again.

S902: The first terminal device receives a seventh operation from a customer service. The seventh operation is used to request the second terminal device to perform remote control over the first terminal device. The first terminal device may send a second request message to a signaling server in response to a sixth operation of the customer service, or may actively send a second request message to a signaling server according to a service requirement. Therefore, S902 is an optional step.

S903: The first terminal device sends the second request message to the signaling server; and correspondingly, the signaling server receives the second request message from the first terminal device.

The second request message is used by the first terminal device to request the second terminal device to perform remote control over the first terminal device. Optionally, the second request message includes second information. The second information is included in a contact field of an SIP message, or included in a supported field of an SIP message, or included in a body field of an SDP message.

S904: The signaling server sends a third re-invitation message to the first terminal device; and correspondingly, the first terminal device receives the third re-invitation message from the signaling server.

The third re-invitation message is used to renegotiate a resource for transmitting second remote control information between the signaling server and the first terminal device, or used to negotiate to establish a fourth call connection, or used to renegotiate a call resource between the first terminal device and the second terminal device. The third re-invitation message may include the second information and fifth media resource information corresponding to the fourth call connection. The second information may be included in a contact field of an SIP message, or included in a supported field of SIP message, or included in a body field of an SDP message. Optionally, the fifth media resource information is included in an SDP message. Optionally, the third re-invitation message may further include fourth information.

S905: The first terminal device sends a third acknowledgment message to the signaling server; and correspondingly, the signaling server receives the third acknowledgment message from the first terminal device.

The third acknowledgment message is used to determine a resource for transmitting the second remote control information between the signaling server and the first terminal device. The third acknowledgment message may include the second information and sixth media resource information corresponding to the fourth call connection. The second information may be included in a contact field of an SIP message, or included in a supported field of an SIP message, or included in a body field of an SDP message. Optionally, the sixth media resource information is included in an SDP message. Optionally, the third acknowledgment message may further include the fourth information.

At this point, the fourth call connection is established.

S906: The signaling server sends a fourth re-invitation message to the second terminal device; and correspondingly, the second terminal device receives the fourth re-invitation message from the signaling server.

The fourth re-invitation message is used to renegotiate a resource for transmitting the second remote control information between the signaling server and the second terminal device, or used to negotiate to establish a third call connection, or used to renegotiate a call resource between the first terminal device and the second terminal device. The fourth re-invitation message may include seventh media resource information corresponding to the third call connection. Optionally, the seventh media resource information is included in an SDP message.

In an example, S906 includes S906a and S906b. S906a: The signaling server sends the fourth re-invitation message to the IMS; and correspondingly, the IMS receives the fourth re-invitation message from the signaling server. S906b: The IMS sends the fourth re-invitation message to the second terminal device; and correspondingly, the second terminal device receives the fourth re-invitation message from the IMS.

S907: The second terminal device sends a fourth acknowledgment message to the signaling server; and correspondingly, the signaling server receives the fourth acknowledgment message from the second terminal device.

The fourth acknowledgment message is used to determine a resource for transmitting the second remote control information between the signaling server and the second terminal device. The fourth acknowledgment message includes eighth media resource information corresponding to the third call connection. Optionally, the eighth media resource information is included in an SDP message.

In an example, S907 includes S907a and S907b. S907a: The second terminal device sends the fourth acknowledgment message to the IMS; and correspondingly, the IMS receives the fourth acknowledgment message from the second terminal device. S907b: The IMS sends the fourth acknowledgment message to the signaling server; and correspondingly, the signaling server receives the fourth acknowledgment message from the IMS.

At this point, the third call connection is established.

S908: The second terminal device receives a fifth operation from a subscriber. The fifth operation is an operation that the subscriber performs remote control over the first terminal device by using the second terminal device.

S909: The second terminal device sends the second remote control information to the signaling server; and correspondingly, the signaling server receives the second remote control information from the second terminal device. For example, the second terminal device generates the second remote control information in response to the fifth operation of the subscriber, and send the second remote control information to the signaling server over the third call connection.

In an example, S909 includes S909a and S909b. S909a: The second terminal device sends the second remote control information to the IMS; and correspondingly, the IMS receives the second remote control information from the second terminal device. S909b: The IMS sends the second remote control information to the signaling server; and correspondingly, the signaling server receives the second remote control information from the IMS.

S910: The signaling server sends the second remote control information to the first terminal device; and correspondingly, the first terminal device receives the second remote control information from the signaling server. For example, the signaling server sends the second remote control information to the first terminal device over the fourth call connection.

S911: The first terminal device executes the second remote control information.

S912: The first terminal device receives a fourth operation from the subscriber. The fourth operation indicates to cancel the remote control performed by the second terminal device over the first terminal device.

S913: The first terminal device sends second indication information to the signaling server; and correspondingly, the signaling server receives the second indication information from the first terminal device. The second indication information may indicate to cancel the remote control performed by the second terminal device over the first terminal device.

S914: The signaling server sends the second indication information to the second terminal device. Correspondingly, the second terminal device receives the second indication information from the signaling server.

In an example, S914 includes S914a and S914b. S914a: The signaling server sends the second indication information to the IMS; and correspondingly, the IMS receives the second indication information from the signaling server. S914b: The IMS sends the second indication information to the second terminal device; and correspondingly, the second terminal device receives the second indication information from the IMS.

S915: The second terminal device cancels the remote control over the first terminal device. For example, the second terminal device cancels the remote control over the first terminal device based on the second indication information.

It should be understood that the second terminal device may cancel the remote control over the first terminal device in response to the second indication information of the first terminal device, or may actively cancel the remote control over the first terminal device. Therefore, S912 to S915 are optional steps.

For a specific implementation process in FIG. 9, refer to related content in FIG. 8. Details are not described herein again.

In the foregoing embodiments of this application, the service system sends the second remote control information of the second terminal device to the first terminal device over a call connection between the first terminal device and the second terminal device, so that the second terminal device implements remote control over the first terminal device. No remote control application program needs to be installed on the first terminal device and the second terminal device, saving storage resources of the terminal device. The operation is simple and easy to implement.

In the foregoing embodiments provided in this application, solutions of the remote control methods provided in embodiments of this application are separately described from perspectives of functional modules or devices and interaction between the functional modules or devices. It may be understood that, to implement the foregoing functions, each functional module or device, for example, the foregoing service system, the first terminal device, or the second terminal device, includes a corresponding hardware structure and/or software module for performing each function. A person skilled in the art should easily be aware that, in combination with units and algorithm steps of the examples described in embodiments disclosed in this application, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

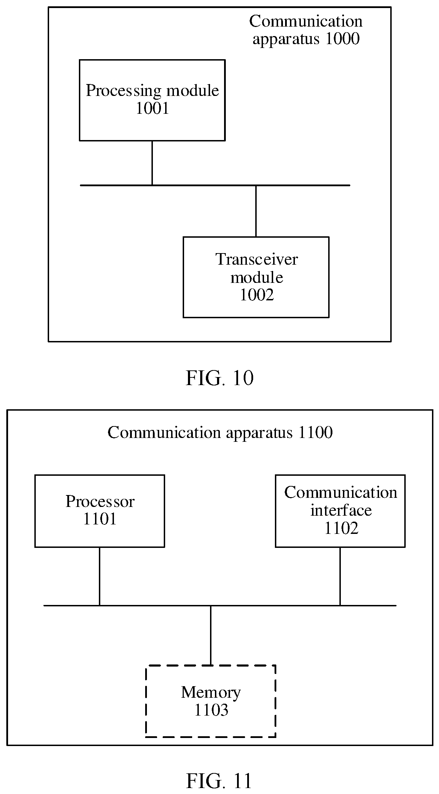

For example, when the foregoing functional modules or devices implement corresponding functions by using software modules, a communication apparatus provided in an embodiment of this application may be shown in FIG. 10. As shown in FIG. 10, a communication apparatus 1000 may include a processing module 1001 and a transceiver module 1002. The processing module 1001 is configured to control and manage an action of the communication apparatus 1000. The transceiver module 1002 is configured to receive information (a message or data) and/or send information (a message or data). The processing module 1001 may be further configured to control a step performed by the transceiver module 1002.

Optionally, the communication apparatus 1000 may be the service system in the foregoing embodiments, or a processor, a chip, a chip system, a functional module, or the like in the service system.

In an example, the transceiver module 1002 is configured to: receive, under control of the processing module 1001, first remote control information from a first terminal device over a first call connection, where the first remote control information is used by the first terminal device for remote control over a second terminal device; and send the first remote control information to the second terminal device over a second call connection, where the first call connection and the second call connection are call connections between the first terminal device and the second terminal device.

In a possible implementation, the transceiver module 1002 is further configured to receive a first request message from the first terminal device, where the first request message is used by the first terminal device to request remote control over the second terminal device.

In a possible implementation, that the first request message is used by the first terminal device to request remote control over the second terminal device may be specifically: The first request message includes first information, and the first information is used by the first terminal device to request remote control over the second terminal device. The first information may be, for example, a remote control identifier.

In a possible implementation, before receiving the first remote control information from the first terminal device over the first call connection, the processing module 1001 is further configured to establish the first call connection with the first terminal device. For example, the transceiver module 1002 is further configured to: send first media resource information corresponding to the first call connection to the first terminal device, where the first media resource information indicates a resource used by the service system to receive the first remote control information; and receive second media resource information corresponding to the first call connection from the first terminal device, where the second media resource information indicates a resource used by the first terminal device to send the first remote control information.

In a possible implementation, before sending the first remote control information to the second terminal device over the second call connection, the processing module 1001 is further configured to establish the second call connection with the second terminal device. For example, the transceiver module 1002 is further configured to: send the first information and third media resource information corresponding to the second call connection to the second terminal device, where the first information is used by the first terminal device to request remote control over the second terminal device, and the third media resource information indicates a resource used by the service system to send the first remote control information; and receive the first information and fourth media resource information corresponding to the second call connection from the second terminal device, where the fourth media resource information indicates a resource used by the second terminal device to receive the first remote control information.

In a possible implementation, the first information may be included in a contact field of a session initiation protocol message; or
the first information may be included in a supported field of a session initiation protocol message; or
the first information may be included in a body field of a session description protocol message.

In a possible implementation, the transceiver module 1002 is configured to: receive first indication information from the second terminal device over the second call connection, where the first indication information indicates to cancel the remote control performed by the first terminal device over the second terminal device; and send the first indication information to the first terminal device over the first call connection.

In another example, the transceiver module 1002 is configured to: receive, under control of the processing module 1001, second remote control information from the second terminal device over a third call connection, where the second remote control information is used by the second terminal device for remote control over the first terminal device; and send the second remote control information to the first terminal device over a fourth call connection, where the third call connection and the fourth call connection are call connections between the first terminal device and the second terminal device.

In a possible implementation, the transceiver module 1002 is further configured to receive a second request message from the first terminal device, where the second request message is used by the first terminal device to request the second terminal device to perform remote control over the first terminal device.

In a possible implementation, that the second request message is used by the first terminal device to request the second terminal device to perform remote control over the first terminal device may be specifically: The second request message includes second information, and the second information is used by the first terminal device to request the second terminal device to perform remote control over the first terminal device.

In a possible implementation, before sending the second remote control information to the first terminal device over the fourth call connection, the processing module 1001 is further configured to establish the fourth call connection with the first terminal device. For example, the transceiver module 1002 is further configured to: send the second information and fifth media resource information corresponding to the fourth call connection to the first terminal device, where the fourth information is used by the first terminal device to request the second terminal device to perform remote control over the first terminal device, and the fifth media resource information indicates a resource used by the service system to send the second remote control information; and receive the second information and sixth media resource information corresponding to the fourth call connection from the first terminal device, where the sixth media resource information indicates a resource used by the first terminal device to receive the second remote control information.

In a possible implementation, before receiving the second remote control information from the second terminal device over the third call connection, the processing module 1001 is further configured to establish the third call connection with the second terminal device. For example, the transceiver module 1002 is further configured to: send seventh media resource information corresponding to the third call connection to the second terminal device, where the seventh media resource information indicates a resource used by the service system to receive the second remote control information; and receive eighth media resource information corresponding to the third call connection from the second terminal device, where the eighth media resource information indicates a resource used by the second terminal device to send the second remote control information.

In a possible implementation, the second information may be included in a contact field of a session initiation protocol message; or
the second information may be included in a supported field of a session initiation protocol message; or
the second information may be included in a body field of a session description protocol message.

In a possible implementation, the transceiver module 1002 is further configured to: receive second indication information from the first terminal device over a fourth call connection, where the second indication information indicates to cancel the remote control performed by the second terminal device over the first terminal device; and send the second indication information to the second terminal device over the third call connection.

Optionally, the communication apparatus 1000 may be the first terminal device in the foregoing embodiments, or a processor, a chip, a chip system, a functional module, or the like in the first terminal device.

In an example, the transceiver module 1002 is configured to: receive, under control of the processing module 1001, a first operation from a customer service; and send first remote control information to a service system over a first call connection, where the first call connection is a call connection between the first terminal device and a second terminal device.

In a possible implementation, the transceiver module 1002 is further configured to send a first request message to the service system, where the first request message may be used by the first terminal device to request remote control over the second terminal device.

In a possible implementation, that the first request message is used by the first terminal device to request remote control over the second terminal device may be specifically: The first request message may include first information, and the first information is used by the first terminal device to request remote control over the second terminal device.

In a possible implementation, the first information may be included in a contact field of a session initiation protocol message; or
the first information may be included in a supported field of a session initiation protocol message; or
the first information may be included in a body field of a session description protocol message.

In a possible implementation, before sending the first remote control information to the service system over the first call connection, the processing module 1001 is further configured to establish the first call connection with the service system. For example, the transceiver module 1002 is further configured to: receive first media resource information corresponding to the first call connection from the service system, where the first media resource information indicates a resource used by the service system to receive the first remote control information; and send second media resource information corresponding to the first call connection to the service system, where the second media resource information indicates a resource used by the first terminal device to send the first remote control information.

In a possible implementation, the transceiver module 1002 is further configured to receive first indication information from the service system over the first call connection, where the first indication information indicates to cancel the remote control performed by the first terminal device over the second terminal device; and the processing module 1001 is further configured to cancel the remote control over the second terminal device based on the first indication information.

In another example, the transceiver module 1002 is configured to receive second remote control information from the service system over a fourth call connection, where the fourth call connection is a call connection between the first terminal device and the second terminal device; and the processing module 1001 is configured to execute the second remote control information.

In a possible implementation, the transceiver module 1002 is further configured to send a second request message to the service system, where the second request message may be used by the first terminal device to request the second terminal device to perform remote control over the first terminal device.

In a possible implementation, that the second request message is used by the first terminal device to request the second terminal device to perform remote control over the first terminal device may be specifically: The second request message may include second information, and the second information is used by the first terminal device to request the second terminal device to perform remote control over the first terminal device.

In a possible implementation, before receiving the second remote control information from the service system over the fourth call connection, the processing module 1001 is further configured to establish the fourth call connection with the service system. For example, the transceiver module 1002 is further configured to: receive the second information and fifth media resource information corresponding to the fourth call connection from the service system, where the second information is used by the first terminal device to request the second terminal device to perform remote control over the first terminal device, and the fifth media resource information indicates a resource used by the service system to send the second remote control information; and send the second information and sixth media resource information corresponding to the fourth call connection to the service system, where the sixth media resource information indicates a resource used by the first terminal device to receive the second remote control information.

In a possible implementation, the second information may be included in a contact field of a session initiation protocol message; or
the second information may be included in a supported field of a session initiation protocol message; or
the second information may be included in a body field of a session description protocol message.

In a possible implementation, the transceiver module 1002 is further configured to: receive a fourth operation from the customer service, where the fourth operation indicates to cancel the remote control performed by the second terminal device over the first terminal device; and send second indication information to the service system over the fourth call connection based on the fourth operation, where the first indication information indicates to cancel the remote control performed by the second terminal device over the first terminal device.

Optionally, the communication apparatus 1000 may be the second terminal device in the foregoing embodiments, or a processor, a chip, a chip system, a functional module, or the like in the second terminal device.

In an example, the transceiver module 1002 is configured to receive first remote control information from a service system over a second call connection, where the second call connection is a call connection between a first terminal device and the second terminal device; and the processing module 1001 is configured to execute the first remote control information.

In a possible implementation, before receiving the first remote control information from the service system over the second call connection, the processing module 1001 is further configured to establish the second call connection with the service system. For example, the transceiver module 1002 is further configured to: receive first information and third media resource information corresponding to the second call connection from the service system, where the first information is used by the first terminal device to request remote control over the second terminal device, and the third media resource information indicates a resource used by the service system to send the first remote control information; and send the first information and fourth media resource information corresponding to the second call connection to the service system, where the fourth media resource information indicates a resource used by the second terminal device to receive the first remote control information.

In a possible implementation, the first information may be included in a contact field of a session initiation protocol message; or
the first information may be included in a supported field of a session initiation protocol message; or
the first information may be included in a body field of a session description protocol message.

In a possible implementation, before sending the first information and the fourth media resource information corresponding to the second call connection to the second terminal device, the transceiver module 1002 is further configured to receive a second operation from a subscriber, where the second operation indicates to accept remote over performed by the first terminal device over the second terminal device.

In a possible implementation, the transceiver module 1002 is further configured to: receive a third operation from the subscriber, where the third operation is used to cancel the remote control performed by the first terminal device over the second terminal device; and send first indication information to the service system over the second call connection based on the third operation, where the first indication information indicates to cancel the remote control performed by the first terminal device over the second terminal device.

In another example, the transceiver module 1002 is configured to: receive, under control of the processing module 1001, a fifth operation from the subscriber; and send second remote control information to the service system over a third call connection based on the fifth operation, where the third call connection is a call connection between the first terminal device and the second terminal device.

In a possible implementation, before sending the second remote control information to the service system over the third call connection, the processing module 1001 is further configured to establish the third call connection with the service system. For example, the transceiver module 1002 is further configured to: receive seventh media resource information corresponding to the third call connection from the service system, where the seventh media resource information indicates a resource used by the service system to receive the second remote control information; and send eighth media resource information corresponding to the third call connection to the service system, where the eighth media resource information indicates a resource used by the second terminal device to send the second remote control information.

In a possible implementation, the transceiver module 1002 is further configured to receive second indication information from the service system over the third call connection, where the second indication indicates to cancel the remote control performed by the second terminal device over the first terminal device; and the processing module 1001 is further configured to cancel the remote control over the first terminal device based on the second indication information.

For specific implementation processes of the foregoing implementations, refer to content shown in FIG. 4 to FIG. 9. Details are not described herein again.

It may be understood that unit division in this embodiment of this application is an example, and is merely logical function division. In actual implementation, another division manner may be used. Functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on a same technical concept, an embodiment of this application further provides a communication apparatus. FIG. 11 is a diagram of a structure of a communication apparatus according to an embodiment of this application.

As shown in FIG. 11, the communication apparatus 1100 includes a processor 1101 and a communication interface 1102. The processor 1101 and the communication interface 1102 are coupled to each other. It may be understood that the communication interface 1102 may be a transceiver or an input/output interface. The processor 1101 and the communication interface 1102 may be configured to implement any one of the foregoing remote control methods, for example, the remote control method in any one of FIG. 4 to FIG. 9.

The processor 1101 may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA), or another programmable logic device, a transistor logic device, a hardware component, or any combination thereof. The general-purpose processor may be a microprocessor, any conventional processor, or the like.

Optionally, the communication apparatus 1100 may further include a memory 1103, configured to: store instructions executed by the processor 1101, store input data required by the processor 1101 to run instructions, or store data generated after the processor 1101 runs instructions. In FIG. 11, a dashed box indicates that the memory 1103 is an optional module.

An embodiment of this application provides a communication system. The communication system includes a first terminal device, a second terminal device, and a service system. The communication system may be configured to implement any one of the foregoing remote control methods. For functions of the first terminal device, the second terminal device, and the service system, refer to the foregoing content.

An embodiment of this application provides a chip system. The chip system includes a processor and an interface. The processor is configured to invoke an instruction from the interface the run the instruction. When the processor executes the instruction, any one of the foregoing remote control methods is implemented, for example, the remote control method in any one of FIG. 4 to FIG. 9.

An embodiment of this application provides a computer-readable storage medium. The computer-readable storage medium is configured to store a computer program or instructions. When the computer program or the instructions is/are run, any one of the foregoing remote control methods is implemented, for example, the remote control method in any one of FIG. 4 to FIG. 9.

An embodiment of this application provides a computer program product including instructions. When the computer program product runs on a computer, any one of the foregoing remote control methods is implemented, for example, the remote control method in any one of FIG. 4 to FIG. 9.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include both a volatile storage medium and a non-volatile storage medium.

**In** embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A remote control method, applied to a service system, wherein the method comprises:
receiving first remote control information from a first terminal device over a first call connection, wherein the first remote control information is used by the first terminal device for remote control over a second terminal device; and
sending the first remote control information to the second terminal device over a second call connection, wherein the first call connection and the second call connection are call connections between the first terminal device and the second terminal device.

2. The method according to claim 1, wherein before the receiving first remote control information from a first terminal device over a first call connection, the method further comprises:
receiving a first request message from the first terminal device, wherein the first request message is used by the first terminal device to request remote control over the second terminal device.

3. The method according to claim 2, wherein that the first request message is used by the first terminal device to request remote control over the second terminal device comprises:
the first request message comprises first information, and the first information is used by the first terminal device to request remote control over the second terminal device.

4. The method according to any one of claims 1 to 3, wherein before the receiving first remote control information from a first terminal device over a first call connection, the method further comprises:
establishing the first call connection with the first terminal device.

5. The method according to claim 4, wherein the establishing the first call connection with the first terminal device comprises:
sending first media resource information corresponding to the first call connection to the first terminal device, wherein the first media resource information indicates a resource used by the service system to receive the first remote control information; and
receiving second media resource information corresponding to the first call connection from the first terminal device, wherein the second media resource information indicates a resource used by the first terminal device to send the first remote control information.

6. The method according to any one of claims 1 to 5, wherein before the sending the first remote control information to the second terminal device over a second call connection, the method further comprises:
establishing the second call connection with the second terminal device.

7. The method according to claim 6, wherein the establishing the second call connection with the second terminal device comprises:
sending the first information and third media resource information corresponding to the second call connection to the second terminal device, wherein the first information is used by the first terminal device to request remote control over the second terminal device, and the third media resource information indicates a resource used by the service system to send the first remote control information; and
receiving the first information and fourth media resource information corresponding to the second call connection from the second terminal device, wherein the fourth media resource information indicates a resource used by the second terminal device to receive the first remote control information.

8. The method according to claim 3 or 7, wherein
the first information is comprised in a contact field of a session initiation protocol message; or
the first information is comprised in a supported field of a session initiation protocol message; or
the first information is comprised in a body field of a session description protocol message.

9. The method according to any one of claims 1 to 8, wherein the method further comprises:
receiving first indication information from the second terminal device over the second call connection, wherein the first indication information indicates to cancel the remote control performed by the first terminal device over the second terminal device; and
sending the first indication information to the first terminal device over the first call connection.

10. A remote control method, applied to a first terminal device, wherein the method comprises:
receiving a first operation from a customer service; and
sending first remote control information to a service system over a first call connection based on the first operation, wherein the first call connection is a call connection between the first terminal device and a second terminal device.

11. The method according to claim 10, wherein the method further comprises:
sending a first request message to the service system, wherein the first request message is used by the first terminal device to request remote control over the second terminal device.

12. The method according to claim 11, wherein that the first request message is used by the first terminal device to request remote control over the second terminal device comprises:
the first request message comprises first information, and the first information is used by the first terminal device to request remote control over the second terminal device.

13. The method according to claim 12, wherein
the first information is comprised in a contact field of a session initiation protocol message; or
the first information is comprised in a supported field of a session initiation protocol message; or
the first information is comprised in a body field of a session description protocol message.

14. The method according to any one of claims 10 to 13, wherein before the sending first remote control information to a service system over a first call connection, the method further comprises:
establishing the first call connection with the service system.

15. The method according to claim 14, wherein the establishing the first call connection with the service system comprises:
receiving first media resource information corresponding to the first call connection from the service system, wherein the first media resource information indicates a resource used by the service system to receive the first remote control information; and
sending second media resource information corresponding to the first call connection to the service system, wherein the second media resource information indicates a resource used by the first terminal device to send the first remote control information.

16. The method according to any one of claims 10 to 15, wherein the method further comprises:
receiving first indication information from the service system over the first call connection, wherein the first indication information indicates to cancel the remote control performed by the first terminal device over the second terminal device; and
canceling the remote control over the second terminal device based on the first indication information.

17. A remote control method, applied to a second terminal device, wherein the method comprises:
receiving first remote control information from a service system over a second call connection, wherein the second call connection is a call connection between a first terminal device and the second terminal device; and
executing the first remote control information.

18. The method according to claim 17, wherein before the receiving first remote control information from a service system over a second call connection, the method further comprises:
establishing the second call connection with the service system.

19. The method according to claim 18, wherein the establishing the second call connection with the service system comprises:
receiving first information and third media resource information corresponding to the second call connection from the service system, wherein the first information is used by the first terminal device to request remote control over the second terminal device, and the third media resource information indicates a resource used by the service system to send the first remote control information; and
sending the first information and fourth media resource information corresponding to the second call connection to the service system, wherein the fourth media resource information indicates a resource used by the second terminal device to receive the first remote control information.

20. The method according to claim 19, wherein
the first information is comprised in a contact field of a session initiation protocol message; or
the first information is comprised in a supported field of a session initiation protocol message; or
the first information is comprised in a body field of a session description protocol message.

21. The method according to claim 19 or 20, wherein before the sending the first information and fourth media resource information corresponding to the second call connection to the service system, the method further comprises:
receiving a second operation from a subscriber, wherein the second operation indicates to accept remote control performed by the first terminal device over the second terminal device.

22. The method according to any one of claims 17 to 21, wherein the method further comprises:
receiving a third operation from the subscriber, wherein the third operation is used to cancel the remote control performed by the first terminal device over the second terminal device; and
sending first indication information to the service system over the second call connection based on the third operation, wherein the first indication information indicates to cancel the remote control performed by the first terminal device over the second terminal device.

23. A remote control method, applied to a service system, wherein the method comprises:
receiving second remote control information from a second terminal device over a third call connection, wherein the second remote control information is used by the second terminal device for remote control over a first terminal device; and
sending the second remote control information to the first terminal device over a fourth call connection, wherein the third call connection and the fourth call connection are call connections between the first terminal device and the second terminal device.

24. The method according to claim 23, wherein before the receiving second remote control information from a second terminal device over a third call connection, the method further comprises:
receiving a second request message from the first terminal device, wherein the second request message is used by the first terminal device to request the second terminal device to perform remote control over the first terminal device.

25. The method according to claim 24, wherein that the second request message is used by the first terminal device to request the second terminal device to perform remote control over the first terminal device comprises:
the second request message comprises second information, and the second information is used by the first terminal device to request the second terminal device to perform remote control over the first terminal device.

26. The method according to any one of claims 23 to 25, wherein before the sending the second remote control information to the first terminal device over a fourth call connection, the method further comprises:
establishing the fourth call connection with the first terminal device.

27. The method according to claim 26, wherein the establishing the fourth call connection with the first terminal device comprises:
sending the second information and fifth media resource information corresponding to the fourth call connection to the first terminal device, wherein the second information is used by the first terminal device to request the second terminal device to perform remote control over the first terminal device, and the fifth media resource information indicates a resource used by the service system to send the second remote control information; and
receiving the second information and sixth media resource information corresponding to the fourth call connection from the first terminal device, wherein the sixth media resource information indicates a resource used by the first terminal device to receive the second remote control information.

28. The method according to any one of claims 23 to 27, wherein before the receiving second remote control information from a second terminal device over a third call connection, the method further comprises:
establishing the third call connection with the second terminal device.

29. The method according to claim 28, wherein the establishing the third call connection with the second terminal device comprises:
sending seventh media resource information corresponding to the third call connection to the second terminal device, wherein the seventh media resource information indicates a resource used by the service system to receive the second remote control information; and
receiving eighth media resource information corresponding to the third call connection from the second terminal device, wherein the eighth media resource information indicates a resource used by the second terminal device to send the second remote control information.

30. The method according to claim 25 or 27, wherein
the second information is comprised in a contact field of a session initiation protocol message; or
the second information is comprised in a supported field of a session initiation protocol message; or
the second information is comprised in a body field of a session description protocol message.

31. The method according to any one of claims 23 to 30, wherein the method further comprises:
receiving second indication information from the first terminal device over the fourth call connection, wherein the second indication information indicates to cancel the remote control performed by the second terminal device over the first terminal device; and
sending the second indication information to the second terminal device over the third call connection.

32. A remote control method, applied to a first terminal device, wherein the method comprises:
receiving second remote control information from a service system over a fourth call connection, wherein the fourth call connection is a call connection between the first terminal device and a second terminal device; and
executing the second remote control information.

33. The method according to claim 32, wherein the method further comprises:
sending a second request message to the service system, wherein the second request message is used by the first terminal device to request the second terminal device to perform remote control over the first terminal device.

34. The method according to claim 33, wherein that the second request message is used by the first terminal device to request the second terminal device to perform remote control over the first terminal device comprises:
the second request message comprises second information, and the second information is used by the first terminal device to request the second terminal device to perform remote control over the first terminal device.

35. The method according to any one of claims 32 to 34, wherein before the receiving second remote control information from a service system over a fourth call connection, the method further comprises:
establishing the fourth call connection with the service system.

36. The method according to claim 35, wherein the establishing the fourth call connection with the service system comprises:
receiving the second information and fifth media resource information corresponding to the fourth call connection from the service system, wherein the second information is used by the first terminal device to request the second terminal device to perform remote control over the first terminal device, and the fifth media resource information indicates a resource used by the service system to send the second remote control information; and
sending the second information and sixth media resource information corresponding to the fourth call connection to the service system, wherein the sixth media resource information indicates a resource used by the first terminal device to receive the second remote control information.

37. The method according to claim 34 or 36, wherein
the second information is comprised in a contact field of a session initiation protocol message; or
the second information is comprised in a supported field of a session initiation protocol message; or
the second information is comprised in a body field of a session description protocol message.

38. The method according to any one of claims 32 to 37, wherein the method further comprises:
receiving a fourth operation from a customer service, wherein the fourth operation indicates to cancel the remote control performed by the second terminal device over the first terminal device; and
sending second indication information to the service system over the fourth call connection based on the fourth operation, wherein the second indication information indicates to cancel the remote control performed by the second terminal device over the first terminal device.

39. A remote control method, applied to a second terminal device, wherein the method comprises:
receiving a fifth operation from a subscriber;
sending second remote control information to a service system over a third call connection based on the fifth operation, wherein the third call connection is a call connection between a first terminal device and the second terminal device.

40. The method according to claim 39, wherein before the sending second remote control information to a service system over a third call connection, the method further comprises:
establishing the third call connection with the service system.

41. The method according to claim 40, wherein the establishing the third call connection with the service system comprises:
receiving seventh media resource information corresponding to the third call connection from the service system, wherein the seventh media resource information indicates a resource used by the service system to receive the second remote control information; and
sending eighth media resource information corresponding to the third call connection to the service system, wherein the eighth media resource information indicates a resource used by the second terminal device to send the second remote control information.

42. The method according to any one of claims 39 to 41, wherein the method further comprises:
receiving second indication information from the service system over the third call connection, wherein the second indication information indicates to cancel remote control performed by the second terminal device over the first terminal device; and
canceling the remote control over the first terminal device based on the second indication information.

43. A communication apparatus, wherein the apparatus comprises a transceiver module, wherein
the transceiver module is configured to receive first remote control information from a first terminal device over a first call connection, wherein the first remote control information is used by the first terminal device for remote control over a second terminal device; and send the first remote control information to the second terminal device over a second call connection, wherein the first call connection and the second call connection are call connections between the first terminal device and the second terminal device.

44. The apparatus according to claim 43, wherein before receiving the first remote control information from the first terminal device over the first call connection, the transceiver module is further configured to:
receive a first request message from the first terminal device, wherein the first request message is used by the first terminal device to request remote control over the second terminal device.

45. The apparatus according to claim 44, wherein that the first request message is used by the first terminal device to request remote control over the second terminal device comprises:
the first request message comprises first information, and the first information is used by the first terminal device to request remote control over the second terminal device.

46. The apparatus according to any one of claims 43 to 45, wherein before receiving the first remote control information from the first terminal device over the first call connection, the apparatus further comprises a processing module, wherein the processing module is configured to:
establish the first call connection with the first terminal device.

47. The apparatus according to claim 46, wherein when establishing the first call connection with the first terminal device, the transceiver module is configured to:
send first media resource information corresponding to the first call connection to the first terminal device, wherein the first media resource information indicates a resource used by the communication apparatus to receive the first remote control information; and
receive second media resource information corresponding to the first call connection from the first terminal device, wherein the second media resource information indicates a resource used by the first terminal device to send the first remote control information.

48. The apparatus according to any one of claims 43 to 47, wherein before sending the first remote control information to the second terminal device over the second call connection, the apparatus further comprises a processing module, wherein the processing module is configured to:
establish the second call connection with the second terminal device.

49. The apparatus according to claim 48, wherein when establishing the second call connection with the second terminal device, the transceiver module is configured to:
send the first information and third media resource information corresponding to the second call connection to the second terminal device, wherein the first information is used by the first terminal device to request remote control over the second terminal device, and the third media resource information indicates a resource used by the communication apparatus to send the first remote control information; and
receive the first information and fourth media resource information corresponding to the second call connection from the second terminal device, wherein the fourth media resource information indicates a resource used by the second terminal device to receive the first remote control information.

50. The apparatus according to claim 45 or 49, wherein
the first information is comprised in a contact field of a session initiation protocol message; or
the first information is comprised in a supported field of a session initiation protocol message; or
the first information is comprised in a body field of a session description protocol message.

51. The apparatus according to any one of claims 43 to 50, wherein the transceiver module is further configured to:
receive first indication information from the second terminal device over the second call connection, wherein the first indication information indicates to cancel the remote control performed by the first terminal device over the second terminal device; and
send the first indication information to the first terminal device over the first call connection.

52. A communication apparatus, wherein the apparatus comprises a transceiver module, wherein
the transceiver module is configured to receive a first operation from a customer service; and send first remote control information to a service system over a first call connection based on the first operation, wherein the first call connection is a call connection between the communication apparatus and a second terminal device.

53. The apparatus according to claim 52, wherein the transceiver module is further configured to:
send a first request message to the service system, wherein the first request message is used by the communication apparatus to request remote control over the second terminal device.

54. The apparatus according to claim 53, wherein that the first request message is used by the communication apparatus to request remote control over the second terminal device comprises:
the first request message comprises first information, and the first information is used by the communication apparatus to request remote control over the second terminal device.

55. The apparatus according to claim 54, wherein
the first information is comprised in a contact field of a session initiation protocol message; or
the first information is comprised in a supported field of a session initiation protocol message; or
the first information is comprised in a body field of a session description protocol message.

56. The apparatus according to any one of claims 52 to 55, wherein before sending the first remote control information to the service system over the first call connection, the apparatus further comprises a processing module, wherein the processing module is configured to:
establish the first call connection with the service system.

57. The apparatus according to claim 56, wherein when establishing the first call connection with the service system, the transceiver module is configured to:
receive first media resource information corresponding to the first call connection from the service system, wherein the first media resource information indicates a resource used by the service system to receive the first remote control information; and
send second media resource information corresponding to the first call connection to the service system, wherein the second media resource information indicates a resource used by the communication apparatus to send the first remote control information.

58. The apparatus according to any one of claims 52 to 57, wherein the apparatus further comprises a processing module, wherein
the transceiver module is further configured to receive first indication information from the service system over the first call connection, wherein the first indication information indicates to cancel the remote control performed by the communication apparatus over the second terminal device; and
the processing module is configured to cancel the remote control over the second terminal device based on the first indication information.

59. A communication apparatus, wherein the apparatus comprises a transceiver module and a processing module, wherein
the transceiver module is configured to receive first remote control information from a service system over a second call connection, wherein the second call connection is a call connection between a first terminal device and the communication apparatus; and
the processing module is configured to execute the first remote control information.

60. The apparatus according to claim 59, wherein before receiving the first remote control information from the service system over the second call connection, the processing module is further configured to:
establish the second call connection with the service system.

61. The apparatus according to claim 60, wherein when establishing the second call connection with the service system, the transceiver module is configured to:
receive first information and third media resource information corresponding to the second call connection from the service system, wherein the first information is used by the first terminal device to request remote control over the communication apparatus, and the third media resource information indicates a resource used by the service system to send the first remote control information; and
send the first information and fourth media resource information corresponding to the second call connection to the service system, wherein the fourth media resource information indicates a resource used by the communication apparatus to receive the first remote control information.

62. The apparatus according to claim 61, wherein
the first information is comprised in a contact field of a session initiation protocol message; or
the first information is comprised in a supported field of a session initiation protocol message; or
the first information is comprised in a body field of a session description protocol message.

63. The apparatus according to claim 61 or 62, wherein before sending the first information and the fourth media resource information corresponding to the second call connection to the communication apparatus, the transceiver module is further configured to:
receive a second operation from a subscriber, wherein the second operation indicates to accept remote control performed by the first terminal device over the communication apparatus.

64. The apparatus according to any one of claims 59 to 63, wherein the transceiver module is further configured to:
receive a third operation from the subscriber, wherein the third operation is used to cancel the remote control performed by the first terminal device over the communication apparatus; and
send first indication information to the service system over the second call connection based on the third operation, wherein the first indication information indicates to cancel the remote control performed by the first terminal device over the communication apparatus.

65. A communication apparatus, wherein the apparatus comprises a transceiver module, wherein
the transceiver module is configured to receive second remote control information from a second terminal device over a third call connection, wherein the second remote control information is used by the second terminal device for remote control over a first terminal device; and send the second remote control information to the first terminal device over a fourth call connection, wherein the third call connection and the fourth call connection are call connections between the first terminal device and the second terminal device.

66. The apparatus according to claim 65, wherein before receiving the second remote control information from the second terminal device over the third call connection, the transceiver module is further configured to:
receive a second request message from the first terminal device, wherein the second request message is used by the first terminal device to request the second terminal device to perform remote control over the first terminal device.

67. The apparatus according to claim 66, wherein that the second request message is used by the first terminal device to request the second terminal device to perform remote control over the first terminal device comprises:
the second request message comprises second information, and the second information is used by the first terminal device to request the second terminal device to perform remote control over the first terminal device.

68. The apparatus according to any one of claims 65 to 67, wherein before sending the second remote control information to the first terminal device over the fourth call connection, the apparatus further comprises a processing module, wherein the processing module is configured to:
establish the fourth call connection with the first terminal device.

69. The apparatus according to claim 68, wherein when establishing the fourth call connection with the first terminal device, the transceiver module is configured to:
send the second information and fifth media resource information corresponding to the fourth call connection to the first terminal device, wherein the second information is used by the first terminal device to request the second terminal device to perform remote control over the first terminal device, and the fifth media resource information indicates a resource used by the communication apparatus to send the second remote control information; and
receive the second information and sixth media resource information corresponding to the fourth call connection from the first terminal device, wherein the sixth media resource information indicates a resource used by the first terminal device to receive the second remote control information.

70. The apparatus according to any one of claims 65 to 69, wherein before receiving the second remote control information from the second terminal device over the third call connection, the apparatus further comprises a processing module, wherein the processing module is configured to:
establish the third call connection with the second terminal device.

71. The apparatus according to claim 70, wherein when establishing the third call connection with the second terminal device, the transceiver module is configured to:
send seventh media resource information corresponding to the third call connection to the second terminal device, wherein the seventh media resource information indicates a resource used by the communication apparatus to receive the second remote control information; and
receive eighth media resource information corresponding to the third call connection from the second terminal device, wherein the eighth media resource information indicates a resource used by the second terminal device to send the second remote control information.

72. The apparatus according to claim 67 or 69, wherein
the second information is comprised in a contact field of a session initiation protocol message; or
the second information is comprised in a supported field of a session initiation protocol message; or
the second information is comprised in a body field of a session description protocol message.

73. The apparatus according to any one of claims 65 to 72, wherein the transceiver module is further configured to:
receive second indication information from the first terminal device over the fourth call connection, wherein the second indication information indicates to cancel the remote control performed by the second terminal device over the first terminal device; and
send the second indication information to the second terminal device over the third call connection.

74. A communication apparatus, wherein the apparatus comprises a transceiver module and a processing module, wherein
the transceiver module is configured to receive second remote control information from a service system over a fourth call connection, wherein the fourth call connection is a call connection between the communication apparatus and a second terminal device; and
the processing module is configured to execute the second remote control information.

75. The apparatus according to claim 74, wherein the transceiver module is further configured to:
send a second request message to the service system, wherein the second request message is used by the communication apparatus to request the second terminal device to perform remote control over the communication apparatus.

76. The apparatus according to claim 75, wherein that the second request message is used by the communication apparatus to request the second terminal device to perform remote control over the communication apparatus comprises:
the second request message comprises second information, and the second information is used by the communication apparatus to request the second terminal device to perform remote control over the communication apparatus.

77. The apparatus according to any one of claims 74 to 76, wherein before receiving the second remote control information from the service system over the fourth call connection, the processing module is further configured to:
establish the fourth call connection with the service system.

78. The apparatus according to claim 77, wherein when establishing the fourth call connection with the service system, the transceiver module is configured to:
receive the second information and fifth media resource information corresponding to the fourth call connection from the service system, wherein the second information is used by the communication apparatus to request the second terminal device to perform remote control over the communication apparatus, and the fifth media resource information indicates a resource used by the service system to send the second remote control information; and
send the second information and sixth media resource information corresponding to the fourth call connection to the service system, wherein the sixth media resource information indicates a resource used by the communication apparatus to receive the second remote control information.

79. The apparatus according to claim 76 or 78, wherein
the second information is comprised in a contact field of a session initiation protocol message; or
the second information is comprised in a supported field of a session initiation protocol message; or
the second information is comprised in a body field of a session description protocol message.

80. The apparatus according to any one of claims 74 to 79, wherein the transceiver module is further configured to:
receive a fourth operation from a customer service, wherein the fourth operation indicates to cancel the remote control performed by the second terminal device over the communication apparatus; and
send second indication information to the service system over the fourth call connection based on the fourth operation, wherein the second indication information indicates to cancel the remote control performed by the second terminal device over the communication apparatus.

81. A communication apparatus, wherein the apparatus comprises a transceiver module, wherein
the transceiver module is configured to receive a fifth operation from a subscriber; and send second remote control information to a service system over a third call connection based on the fifth operation, wherein the third call connection is a call connection between a first terminal device and the communication apparatus.

82. The apparatus according to claim 81, wherein before sending the second remote control information to the service system over the third call connection, the apparatus further comprises a processing module, wherein the processing module is configured to:
establish the third call connection with the service system.

83. The apparatus according to claim 82, wherein when establishing the third call connection with the service system, the transceiver module is configured to:
receive seventh media resource information corresponding to the third call connection from the service system, wherein the seventh media resource information indicates a resource used by the service system to receive the second remote control information; and
send eighth media resource information corresponding to the third call connection to the service system, wherein the eighth media resource information indicates a resource used by the communication apparatus to send the second remote control information.

84. The apparatus according to any one of claims 81 to 83, wherein the apparatus further comprises a processing module, wherein
the transceiver module is further configured to receive second indication information from the service system over the third call connection, wherein the second indication indicates to cancel the remote control performed by the communication apparatus over the first terminal device; and
the processing module is configured to cancel the remote control over the first terminal device based on the second indication information.

85. A communication system, comprising the communication apparatus according to any one of claims 43 to 51, the communication apparatus according to any one of claims 52 to 58, and the communication apparatus according to any one of claims 59 to 64; or comprising the communication apparatus according to any one of claims 65 to 73, the communication apparatus according to any one of claims 74 to 80, and the communication apparatus according to any one of claims 81 to 84.

86. A communication apparatus, comprising a processor and a communication interface, wherein the communication interface is configured to receive a signal from an apparatus other than the communication apparatus and transmit the signal to the processor, or send a signal from the processor to an apparatus other than the communication apparatus, and the processor executes code instructions by using a logic circuit to implement the method according to any one of claims 1 to 9, the method according to any one of claims 10 to 16, the method according to any one of claims 17 to 22, the method according to any one of claims 23 to 31, the method according to any one of claims 32 to 38, or the method according to any one of claims 39 to 42.

87. A computer-readable storage medium, wherein the storage medium stores a computer program or instructions, and when the computer program or the instructions are executed by a communication apparatus, the method according to any one of claims 1 to 9, the method according to any one of claims 10 to 16, the method according to any one of claims 17 to 22, the method according to any one of claims 23 to 31, the method according to any one of claims 32 to 38, or the method according to any one of claims 39 to 42 is implemented.

88. A computer program product comprising instructions, wherein when the instructions are run by a computing device cluster, the computing device cluster is caused to perform the method according to any one of claims 1 to 9, the method according to any one of claims 10 to 16, the method according to any one of claims 17 to 22, the method according to any one of claims 23 to 31, the method according to any one of claims 32 to 38, or the method according to any one of claims 39 to 42.

89. A chip system, wherein the chip system comprises a processor and an interface, the processor is configured to invoke instructions from the interface and run the instructions, and when executing the instructions, the processor implements the method according to any one of claims 1 to 9, the method according to any one of claims 10 to 16, the method according to any one of claims 17 to 22, the method according to any one of claims 23 to 31, the method according to any one of claims 32 to 38, or the method according to any one of claims 39 to 42.
